# EUROPÄISCHE PATENTSCHRIFT

(11) **EP 1 714 045 B1**
(45) Veröffentlichungstag und Bekanntmachung des Hinweises auf die Patenterteilung: **02.12.2009**
(21) Anmeldenummer: 04804149.5
(22) Anmeldetag: 21.12.2004
(51) Int. Cl.: F16D 1/09

(54) **SCHRUMPFSCHEIBENEINHEIT UND WERKZEUG FÜR DEREN MONTAGE**
SHRINK DISC UNIT AND TOOL FOR ASSEMBLY THEREOF
UNITE DISQUE DE SERRAGE ET OUTIL POUR SON MONTAGE

(30) Priorität: 02.02.2004 DE 202004001530 U
(43) Veröffentlichungstag der Anmeldung: 25.10.2006
(73) Patentinhaber: Landwehr, Wilhelm, 26388 Wilhelmshaven (DE)
(72) Erfinder: Landwehr, Wilhelm, 26388 Wilhelmshaven (DE)
(74) Vertreter: Wess, Wolfgang
(86) Internationale Anmeldenummer: PCT/EP2004/014553
(87) Internationale Veröffentlichungsnummer: WO 2005/073576

(56) Entgegenhaltungen:
- DE-U1- 8 411 110
- DE-U1- 8 714 927
- DE-U1- 9 208 196
- DE-U1- 20 307 136
- FR-A- 2 707 202
- GB-A- 1 586 703
- US-A- 4 616 948
- US-A- 4 702 635

## Beschreibung

Die Erfindung betrifft eine Schrumpfscheibeneinheit, die insbesondere der Verbindung zweier Wellen dienen kann eine solche Schrumpfscheibeneinheit ist aus GB-A-1586703 bekannt. Sie betrifft ferner ein Werkzeug für das Herstellen und/oder Lösen eines von der Schrumpfscheibeneinheit gebildeten Pressverbands. Schließlich betrifft sie eine Montage- und/oder Demontageanordnung, nämlich eine Kombination aus der Schrumpfscheibeneinheit und dem Werkzeug, für die Herstellung und/oder das Lösen des Pressverbands.

Die Verbindung zweier Wellenenden zur Übertragung von Drehmomenten erfolgt in vielen Anwendungsfällen durch einen zylindrischen Pressverband. Bei diesem ist das eine Wellenende als zylindrische Hohlwelle ausgeführt, in welche das im Allgemeinen als zylindrische Vollwelle ausgebildete andere Wellenende eingesteckt ist. Eine zusätzliche Baueinheit ist auf der zylindrischen Außenfläche der Hohlwelle aufgesetzt und übt eine nach radial einwärts gerichtete Kraft auf die Hohlwelle aus. Diese Kraft bewirkt ein Aufpressen der zylindrischen Innenfläche der Hohlwelle auf die zylindrische Außenfläche der Vollwelle, wodurch ein Reibschluss erzeugt wird, welcher Drehmomente und axiale Kräfte von dem einen auf das andere Wellenende übertragen kann.

Ein solcher Schrumpfverband wird beispielsweise bei Windenergieanlagen verwendet, um die Rotorwelle mit der Eingangswelle des Getriebes zu verbinden. Solch ein Verband ist auch ein bevorzugtes Anwendungsbeispiel der Erfindung.

Als Baueinheit zum Erzeugen der radialen Pressung wird dabei vorzugsweise eine so genannte Schrumpfscheibe verwendet, bei der eine dickwandige, innenkonische Nabe auf eine dünnwandige, außenkonische Spannhülse mechanisch oder hydraulisch aufgeschoben wird. Die Spannhülse sitzt mit einer zylindrischen Innenfläche auf der zylindrischen Außenwelle der Hohlwelle. Durch das Aufschieben der Nabe auf die Spannhülse wird die beschriebene, radial wirkende Kraft auf die Hohlwelle ausgeübt.

Die zwei z. Zt. gebräuchlichsten Schrumpfscheiben-Bauarten weisen integrierte Vorrichtungen auf, die externe Werkzeuge bei der Montage und Demontage im Wesentlichen überflüssig machen. Als externe Werkzeuge zur Montage und Demontage der Schrumpfscheiben sind nur Schraubenschlüssel oder Hydraulikpumpen nötig. Die Axialkraft zum Aufschieben der Nabe auf die Spannhülse wird entweder durch Spannschrauben oder durch eine Hydraulikkammer erzeugt.

Zur Demontage der einen Bauart werden die Spannschrauben gelöst. Der konische Flächenverband zwischen Spannhülse und Nabe ist nicht selbsthemmend ausgeführt, so dass die Nabe selbsttätig von der Spannhülse rutscht. Bei der anderen Bauart ist eine zweite Hydraulikkammer installiert, welche zur Demontage eine axiale, zum kleinen Durchmesser des Konus weisende Kraft auf die Nabe erzeugt. Dadurch wird die Nabe gegen die Selbsthemmung in der konischen Trennfuge zwischen Nabe und Spannhülse von der Spannhülse geschoben.

Die Integration der Vorrichtungen zur Erzeugung der Axialkraft für Montage und Demontage erfordert einen sehr hohen Aufwand und führt dadurch zu deutlich höheren Fertigungskosten. Gemessen daran, dass bei einer Anlagenlaufzeit von beispielsweise 20 Jahren der Montage- bzw. Demontagevorgang nur ein- bis zweimal ausgeführt werden soll, ist der Aufwand zur Integration dieser Vorrichtungen ökonomisch unangemessen.

Die Montage einer Schrumpfscheibe der ersten Bauart auf der Hohlwelle erfordert einen hohen Zeitaufwand, da die in großer Anzahl auf dem Umfang verteilten Spannschrauben etappenweise bis zum maximalen Montagedrehmoment festgezogen werden müssen, um ein ungleichmäßiges Verspannen der Schrumpfscheibe zu verhindern. Zudem müssen Pausen eingehalten werden, welche durch Setzvorgänge der Schraubenverbindungen und das erforderliche Nachspannen bedingt sind. Die Montage der Schrumpfscheibe erfordert deshalb einen erheblichen Zeitaufwand.

Eine Schrumpfscheibe der zweiten Bauart hat durch die Integration der Hydraulikkammer zur Erzeugung der Montagekraft eine deutlich größere Baulänge als der zur Erzeugung der radialen Pressung erforderliche Konus. Durch die größere Baulänge ist auch eine längere Hohlwelle erforderlich, um den Einbauraum für die Schrumpfscheibe bereit zu stellen. die Masse und das Trägheitsmoment der Anlage nehmen zu, wodurch sich in vielen Anwendungsfällen negative Auswirkungen auf den Betrieb ergeben können.

Es ist eine Aufgabe der Erfindung, einen auf einer Schrumpfverbindung beruhenden Pressverband von Rotationskörpern, im Folgenden als Schrumpfscheibeneinheit bezeichnet, in einfacher und dadurch preiswerter Bauweise zu schaffen. Trotzdem sollte die für die Montage und/oder Demontage erforderliche Zeit kurz sein. Vorzugsweise ist das Trägheitsmoment geringer als bei den bekannten Schrumpfscheibeneinheiten. Eine weitere Aufgabe ist es, eine ungehinderte Axialbewegung zwischen Teilen der Schrumpfscheibeneinheit bei der Montage und/oder Demontage der Schrumpfscheibeneinheit zu verhindern.

Nach der Erfindung wird die Montage-Axialkraft durch ein separates, vorzugsweise zumindest im Wesentlichen ringförmiges, vorzugsweise geteiltes, d. h. einfach oder mehrfach in Ringsegmente geteiltes Werkzeug aufgebracht, das von der Schrumpfscheibeneinheit lösbar ist und nur während der Montage und Demontage an der Schrumpfscheibeneinheit oder an der Hohlwelle befestigt ist. Aufgrund dieser Ausgestaltung ist es möglich, die Schrumpfscheibeneinheit selbst aus vergleichsweise einfachen und damit preiswerten Bauteilen zu erstellen. Zudem wird so eine Reduzierung der Masse und des Trägheitsmomentes der Wellenverbindung erreicht.

Die Schrumpfscheibeneinheit umfasst eine Nabe mit einer axial sich aufweitenden Umfangsinnenfläche, welche durch die Montage-Axialkraft des Werkzeuges auf eine zu der Umfangsinnenfläche der Nabe zumindest im Wesentlichen kongruent sich einengende Umfangsaußenfläche des Rotationskörpers aufgeschoben wird. Der Rotationskörper kann insbesondere eine Welle, vorzugsweise Hohlwelle, oder eine Spannhülse sein, welche radial zwischen der Nabe und der Welle angeordnet ist. Die Umfangsflächen bilden eine geneigte Trennfuge, über die sie miteinander in flächigem Reibkontakt sind. Vorzugsweise sind die Umfangsflächen, die auch als Schrumpfflächen bezeichnet werden können, als konische Flächen gebildet.

Das Keil- oder Kegelverhältnis der Schrumpfflächen ist vorzugsweise derart gewählt, dass durch die Reibung in der Trennfuge zwischen den Flächen eine Selbsthemmung gegen ein axiales Abrutschen der Nabe von der Umfangsaußenfläche erreicht wird. Um die daraus resultierenden axialen Haltekräfte bei der Montage und Demontage der Nabe zu verringern oder weitestgehend aufzuheben, wird die Trennfuge während der Montage oder Demontage vorzugsweise mit einer Druckflüssigkeit beaufschlagt.

Durch die radialen Zugspannungen in der Nabe, welche während der Montage beim Aufweiten des Nabenkörpers aufgebaut werden, ist die Nabe bestrebt, in Richtung des Gefälles ihrer Umfangsinnenfläche zu rutschen. Wird die Reibung zwischen der Nabe und der Umfangsaußenfläche des Rotationskörpers durch das Einpressen von Druckflüssigkeit in die Trennfuge verringert oder aufgehoben, besteht die Gefahr, dass die Nabe schlagartig von dem Rotationskörper abrutscht. Dies stellt aufgrund der frei werdenden hohen kinetischen Energie der Nabe eine große Gefahr für das Montagepersonal und für andere Anlagenteile dar, falls keine zusätzlichen Sicherungselemente - wie beispielsweise eine Wellenmutter - an dem Rotationskörper montiert werden, um die axiale Bewegung der Nabe zu begrenzen.

Die Erfindung sieht in besonders bevorzugter Ausführung vor, dass durch die Ausgestaltung von Werkzeug und Rotationskörper und/oder Nabe das Einpressen einer Druckflüssigkeit in die Trennfuge nur dann möglich ist, wenn das Werkzeug ordnungsgemäß montiert ist. Dies kann durch eine Druckfluidzuführung über das Werkzeug oder Trennung der Trennfuge von der Umgebung durch Abdichten erfolgen. Das Werkzeug kann auch so gestaltet sein, dass es diese beiden Funktionen in Kombination erfüllt. Durch die weitere Ausgestaltung des Werkzeuges wird die selbsttätige axiale Bewegung der Nabe eingeschränkt. Mittels des Werkzeugs wird eine kontrollierte axiale Bewegung der Nabe auf der Umfangsaußenfläche des Rotationskörpers bewirkt.

Das Werkzeug wird formschlüssig und/oder kraftschlüssig mit dem Rotationskörper, beispielsweise der Spannhülse oder dem freien Ende der Hohlwelle, oder mit der Nabe verbunden. Eine kraftschlüssige Verbindung wird vorzugsweise durch Zugschrauben erreicht, die in die Stirnseite der Spannhülse, Hohlwelle oder Nabe eingeschraubt werden und die das Werkzeug gegen die Spannhülse, Hohlwelle oder Nabe ziehen und dadurch an dieser sichern. Eine formschlüssige Verbindung wird vorzugsweise dadurch erreicht, dass ein Absatz an einer Umfangsinnenfläche des Werkzeuges in einen Gegenabsatz eingreift, der insbesondere von einer radialen, vorzugsweise umlaufenden Nut in einer Umfangsaußenfläche des Rotationskörpers oder der Nabe gebildet werden kann.

Die Montage-Axialkraft wird vorzugsweise durch eine Anzahl von hydraulischen Arbeitszylindern aufgebracht. Alternativ können aber auch Zugschrauben, Druckschrauben, Keilmechanismen oder Hebelmechanismen oder deren Kombinationen verwendet werden.

Die Axialbewegung der Nabe auf dem Rotationskörper erfolgt, bis die vorgesehene radiale Pressung des Pressverbands, vorzugsweise die Pressung einer Hohlwelle auf einer Vollwelle, erreicht ist. Aufgrund der Kraft-Weg-Verhältnisse, welche sich über die Trennfuge ergeben, ist es möglich, die radiale Pressung über den Verschiebeweg der Nabe oder über die aufgebrachten Montagenkräfte zu bestimmen.

Die Demontage der Schrumpfscheibeneinheit erfolgt, indem die Nabe in Richtung des Gefälles der Trennfuge bzw. zum kleineren Durchmesser der bevorzugt konischen Trennfuge, auf dem Rotationskörper verschoben wird. Bei geeigneter Bauart kann das Montagewerkzeug auch als Demontagewerkzeug eingesetzt werden, alternativ kann ein separates Demontagewerkzeug verwendet werden.

Die Selbsthemmung der Nabe gegen ein Verschieben auf der Umfangsaußenfläche gestattet es, in bestimmten Anwendungsfällen während des Betriebes auf eine zusätzliche axiale Sicherung zwischen Nabe und Rotationskörper zu verzichten.

Bei Anwendungsfällen, in denen wegen zu erwartender Vibrationen erhöhte Anforderungen an die Funktionssicherheit der Schrumpfscheibeneinheit gestellt werden, ist eine zusätzliche axiale Sicherung der Nabe auf der Umfangsaußenfläche vorzusehen. Die Sicherung geschieht mittels wenigstens einem Sicherungselement, welches vorzugsweise eine formschlüssige Verbindung zwischen der Nabe und dem Rotationskörper herstellt.

Das unkontrollierte Abrutschen der Nabe bei Montage- und Demontagevorgängen und die damit verbundenen Gefahren werden verhindert, indem der Druckanschluss für das bevorzugt hydraulische Beaufschlagen der Trennfuge mit Drucköl derart ausgestaltet ist, dass er nur durch ein Gegenstück versorgt werden kann, welches unmittelbarer Teil des Werkzeuges ist; ein autonomer Anschluss für das Druckfluid über Hydraulikverschraubungen oder Ähnlichem ist am Pressverband vorzugsweise nicht vorgesehen. Eine andere Ausgestaltung von Druckanschluss und Gegenstück erzwingt die ordnungsgemäße Montage des Werkzeuges, um die Abdichtung des Drucksystems der Schrumpfscheibeneinheit und damit den Druckaufbau zu ermöglichen. Durch diese Maßnahmen ist sichergestellt, dass die Nabe bei einem unkontrollierten Abrutschen von dem Rotationskörper durch das Werkzeug aufgefangen wird, so dass keine Gefahr für Personen oder Material besteht.

Die ordnungsgemäße Montage des Werkzeuges wird vorzugsweise dadurch erzwungen, dass wenigstens ein Abschnitt des Werkzeuges und wenigstens ein Gegenabschnitt des Rotationskörpers oder der Nabe nur bei ordnungsgemäßer Montage des Werkzeuges ineinander greifen. Anderenfalls verhindert die Ausgestaltung dieser Abschnitte die Montage des Werkzeuges völlig.

Die Ausführung einer beschriebenen Schrumpfscheibeneinheit, bei der die als Schrumpffläche dienende Umfangsaußenfläche durch einen Abschnitt einer Hohlwelle ausgebildet wird, bietet sich speziell für Neukonstruktionen an; durch den Verzicht auf eine separate Spannhülse verringern sich der Fertigungs- und der Montageaufwand und damit die Gesamtkosten bei der Anlagenherstellung.

In bestehenden Anlagen können die bislang verwendeten Schrumpfscheibeneinheiten durch eine erfindungsgemäße Schrumpfscheibeneinheit mit Spannhülse ersetzt werden, da die Anschlussmaße identisch bleiben.

Bevorzugte Merkmale der Erfindung werden auch in den Unteransprüchen und deren Kombinationen beschrieben. Die dort beschriebenen Merkmale und die vorstehend erläuterten ergänzen einander wechselseitig in vorteilhafter Weise.

Die Erfindung wird nachfolgend anhand von Ausführungsbeispielen erläutert. An den Ausführungsbeispielen erläuterte Merkmale bilden je einzeln und in den offenbarten Merkmalskombinationen die Gegenstände der Ansprüche vorteilhaft weiter. Es zeigen:
- Figur 1: eine Schrumpfscheibeneinheit nach einem ersten Ausführungsbeispiel,
- Figur 2: eine Schrumpfscheibeneinheit nach einem zweiten Ausführungsbeispiel,
- Figur 3: eine Schrumpfscheibeneinheit nach einem dritten Ausführungsbeispiel,
- Figur 4: eine Schrumpfscheibeneinheit nach einem vierten Ausführungsbeispiel,
- Figur 5: eine Schrumpfscheibeneinheit nach einem fünften Ausführungsbeispiel,
- Figur 6: eine Schrumpfscheibeneinheit nach einem sechsten Ausführungsbeispiel,
- Figur 7: eine Schrumpfscheibeneinheit nach einem siebten Ausführungsbeispiel,
- Figur 8: eine Schrumpfscheibeneinheit nach einem achten Ausführungsbeispiel.

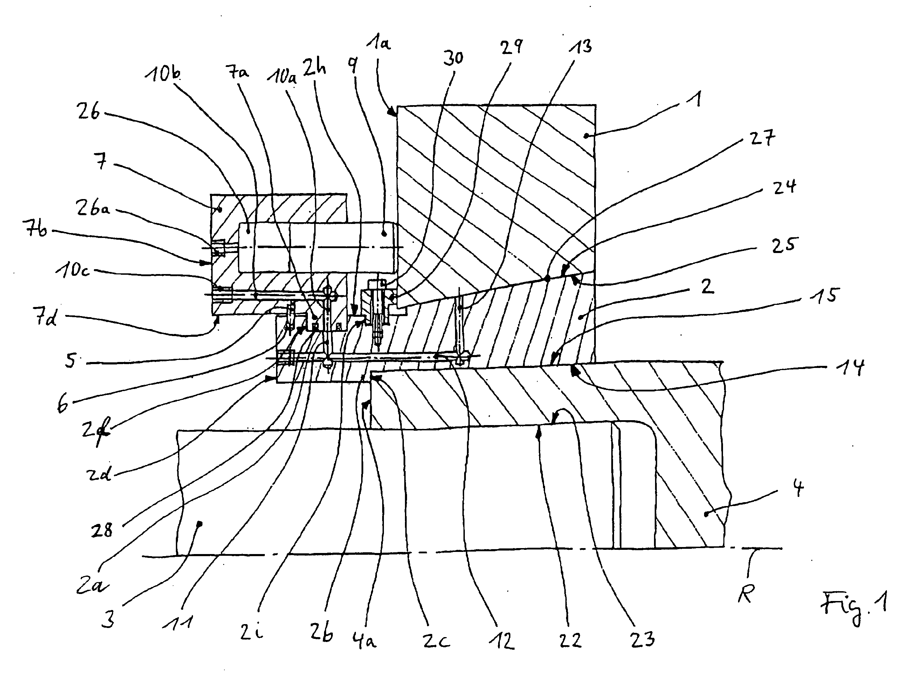

Ein erstes Ausführungsbeispiel einer beschriebenen Schrumpfscheibeneinheit ist in Fig. 1 dargestellt.

Eine Spannhülse (2) ist mit ihrer vorzugsweise zylindrischen Innenfläche (14) auf einer kongruenten Außenfläche (15) einer Hohlwelle (4) angeordnet. In die Hohlwelle (4) ist eine Vollwelle (3) eingesteckt, wobei eine vorzugsweise zylindrische Innenfläche (22) der Hohlwelle (4) an einer kongruenten Außenfläche (23) der Vollwelle (3) anliegt. Die Spannhülse (2) weist eine konische Außenfläche (24) auf, auf der sich eine, mit einem dazu kongruenten Konus versehene Innenfläche (25) einer Nabe (1) abstützt.

Eine als Ringkörper (7) gebildete Fixierstruktur des Montagewerkzeugs weist vorzugsweise eine Anzahl von wenigstens zwei radialen Teilungen auf und ist über einen, von der vorzugsweise zylindrischen Innenfläche (7d) nach radial einwärts gerichteten Steg (7a) in einer Ringnut (2a) der Spannhülse (2) formschlüssig befestigt.

Die axialen Montagekräfte werden hydraulisch erzeugt und von einer Mehrzahl von Arbeitszylindern aufgebracht, welche im Wesentlichen aus Kolben (9) und Zylinderbohrungen (26) mit Druckanschlüssen (26a) bestehen. Die Zylinderbohrungen (26) sind vorzugsweise unmittelbar in den Ringkörper (7) eingearbeitet. Durch ein Beaufschlagen der Zylinderbohrungen (26) mit Druckflüssigkeit üben die Kolben (9) eine axiale Kraft auf die ihnen zugewandte Stirnseite (1a) der Nabe (1) auf, wodurch diese axial auf der Spannhülse (2) verschoben wird.

Die Spannhülse (2) weist vorzugsweise einen Absatz (2b) auf, welcher einen geringeren Innendurchmesser hat als die zylindrische Innenfläche (14). Bei der Montage der Schrumpfscheibeneinheit wird die Spannhülse (2) so weit auf die Hohlwelle (4) aufgeschoben, dass der Absatz (2b) mit seiner Stirnfläche (2c) an der Stirnfläche (4a) des freien Endes der Hohlwelle (4) zur Anlage kommt. Dadurch ist die Position der Spannhülse (2) auf der Hohlwelle (4) festgelegt.

Zur Verringerung der benötigten axialen Montage- und Demontagekräfte ist vorzugsweise vorgesehen, der Trennfuge (27) zwischen der konischen Innenfläche (25) und der konischen Außenfläche (24) eine Druckflüssigkeit zuzuführen.

Die Zuführung der Druckflüssigkeit zu der Trennfuge (27) geschieht über ein System von Bohrungen (10a, 10b, 11, 12 und 13), welche vorzugsweise unmittelbar in den Ringkörper (7) und vorzugsweise unmittelbar in die Spannhülse (2) eingebracht sind. Die Bohrung (11) ist vorzugsweise als Sackloch ausgeführt und derart angeordnet, dass sie von der zylindrischen Mantelfläche der Ringnut (2a) radial zur Mittelachse der Spannhülse (2) ausgerichtet ist. Die als Sackloch ausgebildete Bohrung (13) ist vorzugsweise derart angeordnet, dass sie von der konischen Außenfläche (24) im Wesentlichen radial zu der Mittelachse der Spannhülse (2) weist. Die im Wesentlichen axial zu der Mittelachse der Spannhülse (2) ausgerichtete Bohrung (12) verbindet die radiale Bohrung (11) mit der radialen Bohrung (13). Die als Sackloch ausgeführte Bohrung (12) mündet an einer Stirnfläche (2d) der Spannhülse (2) und ist an der Seite der Stirnfläche (2d) vorzugsweise durch eine geeignete Verschraubung gegen das Austreten von Druckflüssigkeit abgedichtet. Die Bohrung (10a) in dem Ringkörper (7) ist als Sackloch ausgeführt, und ist in dem Steg (7a) so angeordnet, dass sie bei ordnungsgemäß angebautem Montagewerkzeug vorzugsweise fluchtend zu der radialen Bohrung (11) ausgerichtet ist. Die andere Bohrung (10b) ist im Ringkörper (7) als Sackloch ausgeführt und ist im Wesentlichen axial zu der Mittelachse des Ringkörpers (7) angeordnet. Sie verbindet einen Druckanschluss (10c) an der Stirnseite (7b) des Ringkörpers (7) mit der Bohrung (10a). Ein Dichtelement (28) dichtet den Steg (7a) vorzugsweise radial gegen die Ringnut (2a) ab an der Stelle, an der die Druckflüssigkeit von Bohrung (10a) zu Bohrung (11) geleitet wird. Bei fertig montierter Schrumpfscheibeneinheit und entferntem Werkzeug wird die Bohrung (11) mit einer Abdeckung gegen das Eindringen von Verunreinigungen verschlossen.

Die ordnungsgemäße Montage des Ringkörpers (7) an der Spannhülse (2) wird beispielsweise dadurch erzwungen, dass in die zylindrische Innenfläche (7d) des Ringkörpers (7) ein zylindrischer Zapfen (5) eingeschrumpft ist, welcher bei ordnungsgemäßer Montage mit einem vorzugsweise halbkugeligen Ende in eine radiale Bohrung (6) in einer vorzugsweise zylindrischen Außenfläche (2h) der Spannhülse (2) ragt. Die Spannhülse (2) ist derart ausgestaltet, dass der Zapfen (5) nirgendwo sonst als in der Bohrung (6) platziert werden kann. Dadurch ist es nicht möglich, den Ringkörper (7) in einer anderen als der ordnungsgemäßen Lage an der Spannhülse (2) zu montieren. Der Innendurchmesser der Bohrung (6) ist vorzugsweise nur geringfügig größer als der Außendurchmesser des Zapfens (5), so dass ein durch die Montage bedingter, winkliger Versatz zwischen den Bohrungen (10a, 11) an der Übergabestelle minimiert wird.

Die Spannhülse (2) weist an ihrer Außenfläche (2h) eine Anzahl von radialen Nuten (2i) auf. In diese werden Sicherungselemente (29) eingesetzt, die mit Schrauben (30) an der Spannhülse (2) gesichert werden. Die Sicherungselemente (29) bewirken die formschlüssige Verbindung zwischen den radialen Nuten (2i) der Spannhülse (2) und der Stirnseite (1a) der Nabe (1) und sichern so die Nabe (1) vor dem Abrutschen von der Spannhülse (2).

Bei der Montage der Schrumpfscheibeneinheit wird die Nabe (1) mit Druckflüssigkeit beaufschlagter Trennfuge (27) so weit axial auf die Spannhülse (2) aufgeschoben, bis durch das radiale Aufweiten der Nabe (1) die festgelegte Pressung zwischen Hohlwelle (4) und Vollwelle (3) erreicht ist. Dann wird der Flüssigkeitsdruck in der Trennfuge (27) bis auf Atmosphärendruck verringert, so dass die Außenfläche (24) der Spannhülse (2) und die Innenfläche (25) der Nabe (1) zur Anlage kommen. Die radialen Zugkräfte in der Nabe (1) bewirken jetzt den festen reibschlüssigen Sitz der Nabe (1) auf der Spannhülse (2).

Nach dem Ablassen des hydraulischen Druckes in der Trennfuge (27) werden die Sicherungselemente (29) montiert und mit den Schrauben (30) an der Spannhülse (2) befestigt. Die Montage der Schrumpfscheibeneinheit ist damit abgeschlossen. Danach wird der Druck in den Zylinderbohrungen (26) des Montagewerkzeuges abgelassen, und das Montagewerkzeug wird von der Spannhülse (2) entfernt. Die Wellenverbindung ist betriebsbereit.

Die Bauteilgeometrien und die Drücke der Druckflüssigkeit in der Trennfuge (27) sind vorzugsweise derart gewählt, dass die axiale Reibwiderstandskraft in der Trennfuge (27) nach dem Einpressen der Druckflüssigkeit geringer ist als die axiale Kraft, die sich über den Winkel der konischen Trennfuge (27) aus den radialen Kräften in der Nabe (1) ergibt, und die versucht, die Nabe (1) von der Spannhülse (2) zu treiben. Auf diese Weise wird erreicht, dass durch das Einpressen der Druckflüssigkeit in die Trennfuge (27) eine selbsttätige axiale Bewegung der Nabe (1) auf der Außenfläche (24) bewirkt wird, wodurch die Schrumpfscheibeneinheit gelöst wird.

Der Gefahr für das Montagepersonal durch ein unkontrolliertes Abrutschen der Nabe (1) wird dadurch vorgebeugt, dass eine Demontage der Schrumpfscheibeneinheit ohne Anbau des Montagewerkzeuges an der Spannhülse (2) nicht erfolgen kann. Vorzugsweise werden nach dem Anbau des Ringkörpers (7) an der Spannhülse (2) die Kolben (9) an der Stirnseite (1a) der Nabe (1) zur Anlage gebracht, und es wird in den Arbeitszylindern ein Druck aufgebaut, der dem Druck bei der Montage der Schrumpfscheibeneinheit entspricht. Dadurch wird verhindert, dass sich die Nabe (1) beim folgenden Einpressen der Druckflüssigkeit in die Trennfuge (27) axial auf der Spannhülse (2) verschiebt. Nach dem Entfernen der Sicherungselemente (29) wird durch langsames Ablassen von Druckflüssigkeit aus den Arbeitszylindern die Nabe (1) kontrolliert in Richtung des kleineren Konusdurchmessers axial verschoben bis die Schrumpfscheibeneinheit gelöst ist. Dabei ist sicherzustellen, dass der Druck der Druckflüssigkeit in der Trennfuge (27) weitestgehend aufrecht erhalten wird, um die axialen Verschiebekräfte gering zu halten und um "Fresser" zwischen der Spannhülse (2) und der Nabe (1) zu verhindern, die sich sonst aufgrund der Reibung der Oberflächen (24 und 25) bei gleichzeitiger Relativbewegung ergeben könnten.

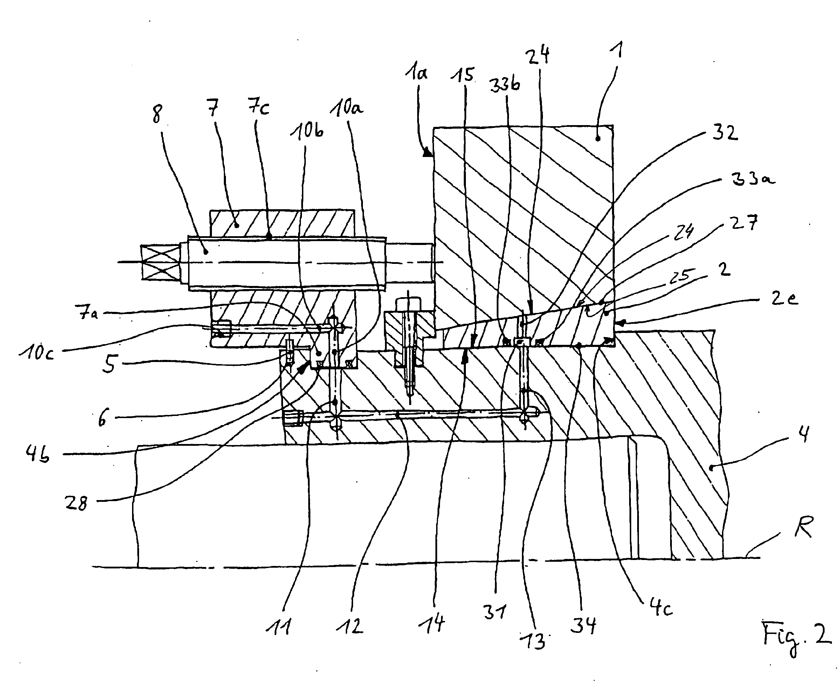

Ein zweites Ausführungsbeispiel einer Schrumpfscheibeneinheit ist in Fig.2 dargestellt. Aufbau und Funktion entsprechen im Wesentlichen dem ersten Ausführungsbeispiel. Im Unterschied dazu ist allerdings der Ringkörper (7) des Montagewerkzeugs mittels einer formschlüssigen Verbindung an der Hohlwelle (4) befestigt.

Die Verbindung wird vorzugsweise dadurch erreicht, dass ein radial umlaufender Steg (7a) des Ringkörpers (7) formschlüssig in eine entsprechende Nut (4b) in der vorzugsweise zylindrischen Außenfläche (15) der Hohlwelle (4) eingreift.

Die axialen Montagekräfte werden mechanisch aufgebracht, im Ausführungsbeispiel von einer Anzahl von Druckschrauben (8), welche in axial ausgerichteten Gewindebohrungen (7c) mit dem Ringkörper (7) verbunden sind. Die Gewindebohrungen (7c) sind vorzugsweise unmittelbar in den Ringkörper (7) eingearbeitet. Durch ein Einschrauben der Druckschrauben (8) in die Gewindebohrungen (7c) wird eine axiale Kraft auf die ihnen zugewandte Stirnseite (1a) der Nabe (1) aufgebracht, wodurch die Nabe (1) axial auf der Spannhülse (2) verschoben wird.

Die radiale Bohrung (6) zur Aufnahme des Zapfens (5) bei ordnungsgemäßer Montage des Ringkörpers (7) ist in die Außenfläche (15) der Hohlwelle (4) eingebracht. Die Hohlwelle (4) weist auf dem betreffenden axialen Abschnitt keine weiteren Ausschnitte oder Vertiefungen auf, die den Zapfen (5) aufnehmen und dadurch einen drehwinkelgenauen Anbau des Montagewerkzeuges erlauben könnten. Dies leistet nur die Bohrung 6.

Die Spannhülse (2) liegt vorzugsweise mit ihrer Stirnseite (2e) an einem Absatz (4c) der Hohlwelle (4) an und ist dadurch axial auf der Hohlwelle (4) positioniert.

Die Bohrungen (11, 12 und 13) für die Zuleitung von Druckflüssigkeit zur Trennfuge (27) sind - im Gegensatz zu dem Ausführungsbeispiel nach Fig.1 - in die Hohlwelle (4) eingebracht. Die Bohrung (11) ist vorzugsweise als Sackloch ausgeführt und derart angeordnet, dass sie von der zylindrischen Mantelfläche der Ringnut (4b) radial zur Mittelachse der Hohlwelle (4) ausgerichtet ist. Die weitere Bohrung (13) ist vorzugsweise ebenfalls als Sackloch ausgeführt und ist im wesentlichen radial von der Außenfläche (15) der Hohlwelle (4) zu der Mittelachse der Hohlwelle (4) angeordnet. Die im Wesentlichen axial zu dieser Mittelachse ausgerichtete Bohrung (12) verbindet die radiale Bohrung (11) mit der radialen Bohrung (13).

Die Spannhülse (2) weist an ihrer zylindrischen Innenfläche (14) vorzugsweise eine radiale Ringnut (31) auf, welche so angeordnet ist, dass die Druckflüssigkeit in montiertem Zustand der Spannhülse (2) aus der Bohrung (13) in die Ringnut (31) eintreten kann. Von der Ringnut (31) führt eine Bohrung (32) vorzugsweise radial zu der konischen Außenfläche (24) der Spannhülse (2), so dass die Trennfuge (27) mit Druckflüssigkeit beaufschlagt werden kann. Vorzugsweise ist in Richtung der Längserstreckung der Spannhülse (2) beidseitig neben der Ringnut (31) jeweils wenigstens ein umlaufendes Dichtelement (33a, 33b) angeordnet, welches die Außenfläche (15) der Hohlwelle (4) gegen die Innenfläche (14) der Spannhülse (2) abdichtet. Auf diese Weise wird verhindert, dass die Druckflüssigkeit durch die Trennfuge (34) zwischen Spannhülse (2) und Hohlwelle (4) entweichen kann.

Die Bohrungen (10a und 10b), der Druckanschluss (10c) und das Dichtelement (28) entsprechen in ihrer Anordnung im Ringkörper (7), in ihrer Ausführung und Funktion vorzugsweise der Art des ersten Ausführungsbeispiels.

Die Montage und die Demontage der Schrumpfscheibeneinheit erfolgen wie bei dem ersten Ausführungsbeispiel, allerdings mit der Ausnahme, dass die axialen Kräfte auf die Nabe (1) mechanisch und nicht hydraulisch erzeugt werden.

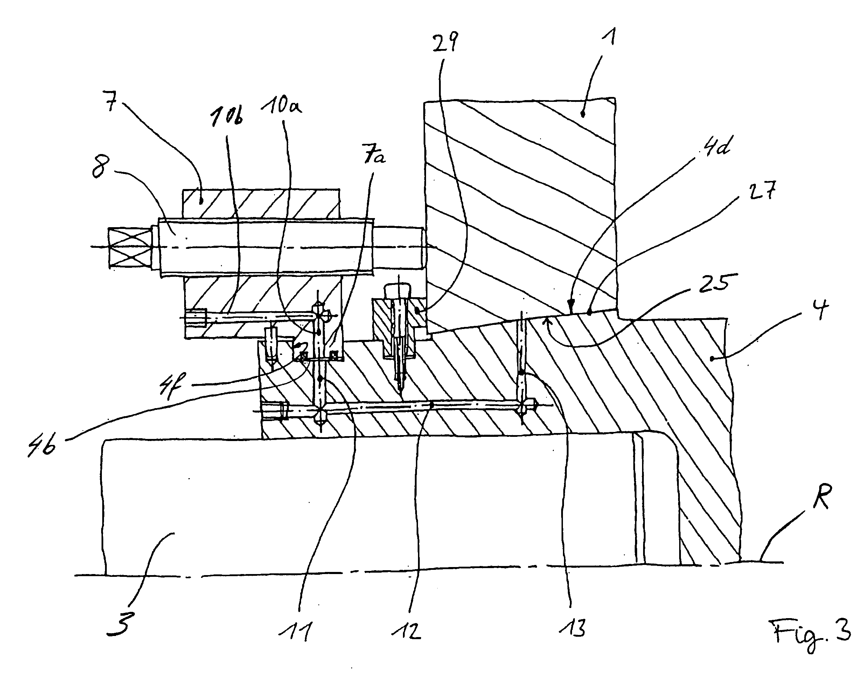

Ein drittes Ausführungsbeispiel einer Schrumpfscheibeneinheit ist in Fig.3 dargestellt. Aufbau und Funktion entsprechen im wesentlichen dem zweiten Ausführungsbeispiel. Im Unterschied dazu wird jedoch die konische Außenfläche (24) von der Hohlwelle (4) gebildet. Die Nabe 1 wird unmittelbar auf der Hohlwelle 4 montiert. Die Beaufschlagung der Trennfuge (27) mit einer Druckflüssigkeit geschieht auch hier über ein System von Zuleitungen (11, 12 und 13), welche bei ordnungsgemäß angebautem Montagewerkzeug mit der Bohrung (10a) des Ringkörpers (7) verbunden sind. Nach erfolgter Montage wird die Nabe (1) ebenfalls durch Sicherungselemente (29) formschlüssig axial an der Hohlwelle (4) gesichert.

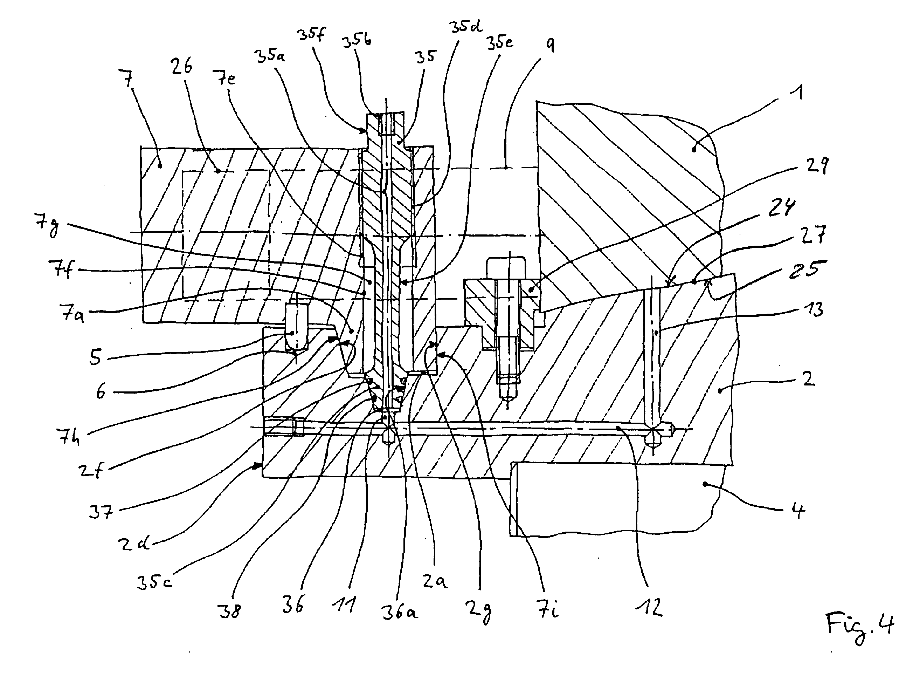

Ein viertes Ausführungsbeispiel einer Schrumpfscheibeneinheit ist in Fig.4 dargestellt. Aufbau und Funktion entsprechen im wesentlichen dem ersten Ausführungsbeispiel. Im Unterschied dazu wird jedoch die Druckflüssigkeit für die Beaufschlagung der Trennfuge (27) über den Druckanschluss (35b) und die Längsbohrung (35a) einer Einschraublanze (35) der radialen Bohrung (11) in der Spannhülse (2) zugeführt. Die Einschraublanze (35) wird nach dem Anbau des Montagewerkzeuges an die Spannhülse (2) mit einem Außengewinde (35d) in das Innengewinde (7e) einer, zu der Bohrung (11) fluchtend angeordneten, im wesentlichen radialen Einbaubohrung (7g) des Ringkörpers (7) eingeschraubt. Dadurch wird ein außenkonischer Zapfen (35c) der Einschraublanze (35) an der vorzugsweise kongruenten Wandung (36a) einer konischen Bohrung (36) der Spannhülse (2) zur Anlage gebracht. Die konische Bohrung (36) ist derart angeordnet, dass ihre Mittellinie im wesentlichen fluchtend zu der Mittellinie der Bohrung (11) verläuft, und dass sie eine Verbindung zu der Bohrung (11) aufweist. Durch die Anlage des Zapfens (35c) an der Wandung (36a) wird das System der Zuleitungen (35a, 11, 12, 13) zu der Trennfuge (27) gegen die Umgebung der Schrumpfscheibeneinheit abgedichtet. Zwei am Zapfen (35c) umlaufende Dichtelemente (37 und 38) bewirken eine zusätzliche Abdichtung zwischen dem Zapfen (35c) und der Wandung (36a). Das Drehmoment zum Einschrauben der Einschraublanze (35) wird über eine Anzahl Schlüsselflächen (35f) eingeleitet.

Die Einschraublanze (35) weist einen verjüngten Schaft (35e) auf, welcher bei eventuellen Verformungen des montierten Ringkörpers (7) unter der axialen Montagekraft des Werkzeuges elastische Biegungen zulässt. Dadurch, dass der maximale Außendurchmesser des konischen Zapfens (35c) kleiner ist als der Innendurchmesser des nicht mit einem Innengewinde versehenen Abschnittes (7f) der radialen Einbaubohrung (7g), ist eine freie Beweglichkeit des Zapfens (35c) relativ zu dem Ringkörper (7) möglich. Durch diese Ausgestaltungen bleibt die Anlage des Zapfens (35c) an der Wandung (36a) der Bohrung (36) bei im Betrieb eventuell auftretenden Verformungen und/oder Verlagerungen des Ringkörpers (7) gewährleistet, so dass eine sichere Beaufschlagung der Trennfuge (27) mit Druckflüssigkeit garantiert ist.

Die Einschraublanze (35) und die Einbaubohrung (7g) sind zwischen zwei im Ringkörper (7) nebeneinander liegenden Zylinderbohrungen (26) angeordnet. Zur Vereinfachung sind in Fig.4 eine der Zylinderbohrungen (26) und einer der Kolben (9) mit gestrichelten Linien dargestellt.

Die Sicherungselemente (29) sind derart ausgebildet und an der Spannhülse (2) angeordnet, dass sie nicht in den Raum hineinragen, der während der Montage der Schrumpfscheibeneinheit von den Kolben (9) eingenommen wird.

Um bei der Montage des Ringkörpers (7) eine möglichst genaue Positionierung der Einschraublanze (35) zu der konischen Bohrung (36) zu erreichen, sind diese vorzugsweise annähernd in der gleichen radialen Ebene angeordnet wie die Zapfen (5) und die zugehörige Bohrung (6). Die Bohrungen 6 und 36 sollten möglichst nahe beieinander angeordnet sein.

Die Ringnut (2a) der Spannhülse (2) weist auf ihrer, der Stirnseite (2d) zugewandten Seite vorzugsweise eine außenkonische Wandung (2f) auf. Die von der Stirnseite (2d) abgewandte Wandung (2g) ist vorzugsweise als Ebene ausgeführt, die senkrecht zu der Mittelachse der Spannhülse (2) ausgerichtet ist. Der radial einwärts gerichtete Steg (7a) des Ringkörpers (7) weist Stirnflächen (7h, 7i) auf, welche kongruent sind zu den Wandungen (2f, 2g) der Ringnut (2a), an denen sie bei ordnungsgemäß montiertem Ringkörper (7) vollflächig anliegen. Diese Ausgestaltung von Ringnut (2a) und Steg (7a) bewirkt eine Abstützung des Ringkörpers (7) durch die Spannhülse (2), wodurch Verformungen des Ringkörpers (7) reduziert werden, welche durch die axiale Montagekraft der Hydraulikzylinder hervorgerufen werden.

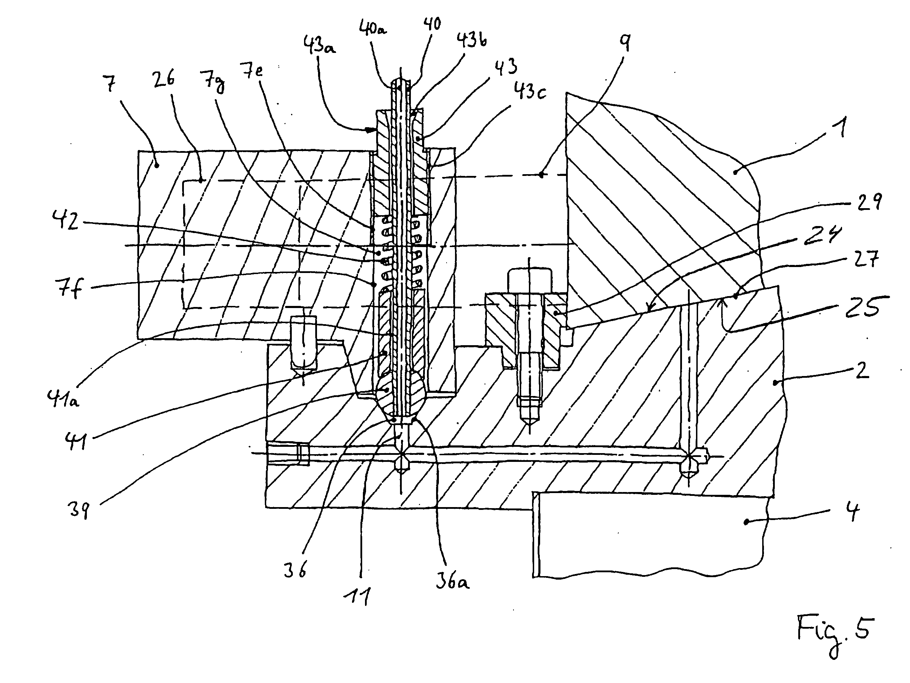

Ein fünftes Ausführungsbeispiel einer Schrumpfscheibeneinheit ist in Fig.5 dargestellt. Aufbau und Funktion entsprechen im Wesentlichen dem in Fig.4 dargestellten Ausführungsbeispiel. Im Unterschied dazu wird hier die Druckflüssigkeit für die Beaufschlagung der Trennfuge (27) über eine vorzugsweise zylindrische Röhre (40) der radialen Bohrung (11) in der Spannhülse (2) zugeführt.

Die Röhre (40) ist an ihrem einen Ende druckdicht und dauerfest mit einem vorzugsweise im wesentlichen kugeligen Körper (39) verbunden, welcher die Röhre (40) radial umschließt, ihren Leitungskanal (40a) aber frei lässt. Der kugelige Körper (39) kann alternativ als Teil der Röhre (40) ausgebildet sein und kann beispielsweise durch Stauchung aus der Röhre (40) geformt werden.

Nach dem Anbau des Ringkörpers (7) an der Spannhülse (2) wird der kugelige Körper (39) an der Wandung (36a) der vorzugsweise wieder konischen Bohrung (36) in der Spannhülse (2) zur Anlage gebracht. Die konische Bohrung (36) ist derart in der Spannhülse (2) angeordnet, dass ihre Mittellinie im wesentlichen fluchtend zu der Mittellinie der Bohrung (11) verläuft, und dass sie eine Verbindung zu der Bohrung (11) aufweist.

Durch das Einschrauben eines, mit einem Außengewinde (43c) versehenen, Druckstückes (43) in ein Innengewinde (7e) des Ringkörpers (7) wird über eine Druckhülse (41) und vorzugsweise über eine Druckfeder (42) eine Kraft auf den kugeligen Körper (39) ausgeübt, die ihn fest an die Wandung (36a) der Bohrung (36) presst. Dieses Aufpressen bewirkt in der Kontaktzone von Wandung (36a) und kugeligem Körper (39) vorzugsweise eine elastische Verformung der Kontaktpartner, wodurch eine Abdichtung zwischen diesen erreicht wird. Die Druckfeder (42) bewirkt unter einem gewissen Längenausgleich das weitgehende Aufrechterhalten der Kraft auf den kugeligen Körper (39), falls sich der Ringkörper (7) im Betrieb des Werkzeuges durch Verformungen oder Verlagerungen relativ zu der Spannhülse (2) bewegt.

Der Außendurchmesser des kugeligen Elementes (39) ist geringer als der Innendurchmesser des nicht mit einem Gewinde versehenen Abschnittes (7f) der Einbaubohrung (7g). Dadurch sind Relativbewegungen zwischen dem kugeligen Element (39) und dem Ringkörper (7) möglich, ohne dass die Abdichtung zwischen dem kugeligen Körper (39) und der konischen Bohrung (36) beeinflusst wird.

Das Druckstück (43) und die Druckhülse (41) weisen Bohrungen (43b, 41a) auf, durch welche die Röhre (40) hindurch geführt ist. Ebenso ist die Röhre (40) durch die axiale Öffnung der Druckfeder (42) hindurchgeführt.

Das Drehmoment zum Einschrauben des Druckstückes (43) in das Innengewinde (7e) wird über eine Anzahl von Schlüsselflächen (43a) in das Druckstück (43) eingeleitet.

Ebenso wie bei dem vierten Ausführungsbeispiel sind die Einbaubohrung (7g) und die aus Röhre (40), Druckhülse (41), Druckfeder (42) und Druckstück (43) bestehende Baueinheit zwischen zwei im Ringkörper (7) nebeneinander liegenden Zylinderbohrungen (26) angeordnet. Zur Vereinfachung sind auch in Fig.5 eine Zylinderbohrung (26) und ein Kolben (9) mit gestrichelten Linien dargestellt. Die Sicherungselemente (29) sind ebenso ausgebildet wie im vierten Ausführungsbeispiel.

Die in den Ausführungsbeispielen nach Fig.4 und Fig.5 dargestellten Zuleitungen der Druckflüssigkeit zu der radialen Bohrung (11) sind auch mit den Ausführungsbeispielen nach Fig.2 und Fig.3 kombinierbar, bei denen der Ringkörper (7) des Montagewerkzeuges formschlüssig mit der Hohlwelle (4) verbunden ist. Die konische Bohrung (36) ist dann in die Hohlwelle (4) eingebracht.

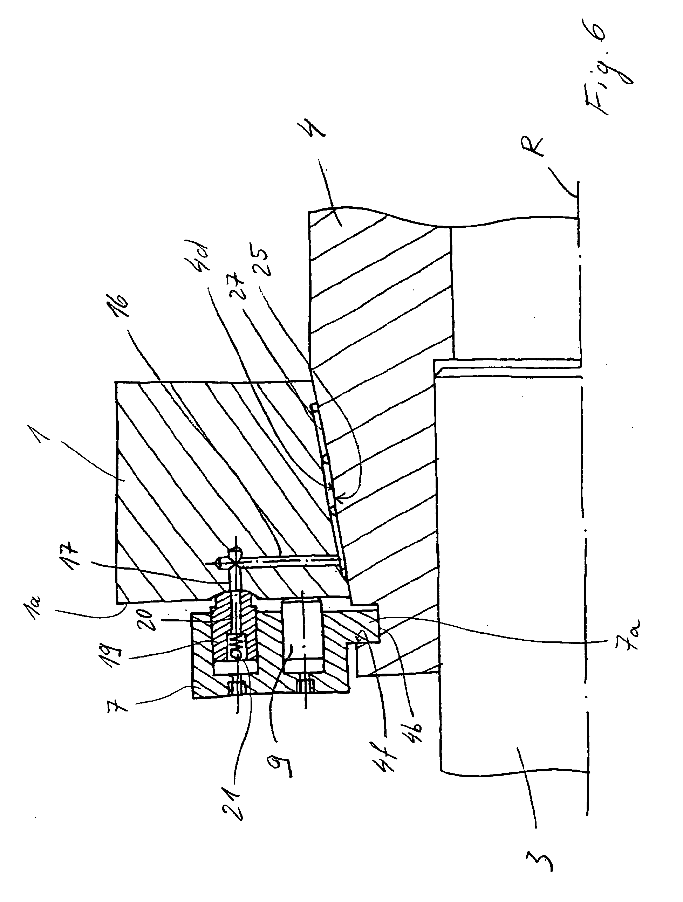

Ein sechstes Ausführungsbeispiel einer erfindungsgemäßen Schrumpfscheibeneinheit ist in Figur 6 dargestellt. Die Schrumpfscheibeneinheit entspricht ihrem grundsätzlichen Aufbau nach dem dritten Ausführungsbeispiel, d. h. die Nabe 1 ist unmittelbar auf die Welle 4 aufgeschrumpft. Zu erkennen ist ein in der Trennfuge 27 gebildetes Verteilersystem für die Druckbeaufschlagung der Trennfuge 27. Das Verteilersystem wird von mehreren umlaufenden Nuten gebildet, die entlang der Rotationsachse R parallel voneinander beabstandet in der Umfangsinnenfläche 25 gebildet sind. Die Umfangsrillen werden von wenigstens einer Axialnut, die ebenfalls in der Umfangsinnenfläche 4d gebildet ist, miteinander verbunden.

Das sechste Ausführungsbeispiel unterscheidet sich von den ersten fünf Ausführungsbeispielen dadurch, dass die Trennfuge 27 durch einen Fluidkanal mit dem Druckfluid versorgt wird, der in der Nabe 1 gebildet ist. Der Fluidkanal weist einen radialen Abschnitt 16 und einen axialen Abschnitt 17 auf, der mit dem Abschnitt 16 verbunden ist und an der dem Werkzeug axial gegenüberliegenden Stirnseite 1 a der Nabe 1 zur Umgebung mündet, so dass bei nicht abgedichteter Mündung ein freier Druckausgleich zwischen der Trennfuge 27 und der Umgebung stattfindet. Die beiden Kanalabschnitte 16 und 17 sind wieder als gerade Bohrungen gebildet und kreuzen einander unmittelbar.

Die Fixierstruktur 7 des Werkzeugs lagert wieder mehrere, um die Rotationsachse R gleichmäßig verteilt angeordnete Kolben 9 axial gegen die Stirnseite 1 a bewegbar. Statt mehrerer einzelner Kolben 9, kann, wie im Übrigen auch bei den anderen Ausführungsbeispielen, ein einziger Ringkolben vorgesehen sein. Die Kolben 9 entsprechen in Funktion und Konstruktion den Kolben 9 der anderen Ausführungsbeispiele.

Die Fixierstruktur 7 lagert einen weiteren Kolben 19 ebenfalls gegen die Stirnseite 1a bewegbar. Der Kolben 19 wirkt als Dichtkolben, der den Fluidkanal 16, 17 von der Umgebung trennt, d. h. gegen die Umgebung abdichtet, wenn er gegen die Stirnseite 1a drückt. Der Dichtkolben 19 ist in der Fixierstruktur 7 so angeordnet, dass er bei ordnungsgemäßer Montage des Werkzeugs, nämlich dessen Fixierstruktur 7, der Mündung des Fluidkanals 16, 17 gegenüberliegt, so dass er gegen den Mündungsbereich bewegt werden kann. Der Dichtkolben 19 bildet einen Fluidkanal 20, durch den hindurch das Druckfluid in den Fluidkanal 16, 17 und somit in die Trennfuge 27 geführt wird, um die Montage und/oder die Demontage der Schrumpfscheibeneinheit zu erleichtern. In den Fluidkanal 20 des Dichtkolbens 19 ist ein Ventil 21, im Ausführungsbeispiel ein Überdruckventil, angeordnet. Das Ventil 21 verschließt den Fluidkanal 20 bis zum Erreichen eines vorgegebenen Zuführdrucks und gibt ihn bei Erreichen bzw. Überschreiten des vorgegebenen Zuführdrucks frei.

Für die Montage und/oder Demontage der Schrumpfscheibeneinheit werden wie in den anderen Ausführungsbeispielen die Kolben 9 mit Druck beaufschlagt, so dass er gegen die Nabe 1 bewegt wird und diese zum Zwecke der Montage entweder auf die Schrumpffläche 4d der Welle 4 aufschiebt oder zum Zwecke der Demontage die Nabe 1 axial an der Welle 4 sichert. Gleichzeitig mit der Beaufschlagung der Kolben 9 mit Druck, wird auch der Dichtkolben 19 mit dem Druckfluid in Richtung Nabe 1 beaufschlagt. Die Zylinderräume des oder der Kolben 9 und des Dichtkolbens 19 können je mit dem Druckfluid und je mit gleichen Drücken beaufschlagt werden. Bis zum Erreichen des vorgegebenen Zuführdrucks in dem Zylinderraum des Dichtkolbens 19 verschließt das Ventil 21 den Fluidkanal 20, so dass ein Einpressen von Druckfluid in den Zylinderraum des Dichtkolbens 19 zuerst ein Ausfahren des Dichtkolbens 19 zur Folge hat. Wenn der Dichtkolben 19 mit seiner Stirnfläche an der Stirnseite 1a der Nabe 1 anliegt, wird der Fluidkanal 17 gegen die Umgebung und somit gegen ein Austreten des Druckfluids abgedichtet. Durch weiteres Einpressen des Druckfluids und der damit verbundenen Druckerhöhung im Zylinderraum des Dichtkolbens 19 öffnet das Ventil 21, so dass das Druckfluid über den Fluidkanal 20 des Dichtkolbens 19 und den Fluidkanal 16, 17 der Nabe 1 in die Trennfuge 27 gelangt und in der Trennfuge 27 ein Fluiddruck aufgebaut wird. Der Dichtkolben 19 fährt mit dem oder den Kolben 9 gemeinsam und bleibt dadurch während der Montage und/oder Demontage in dichtendem Druckkontakt mit der Nabenstimseite 1a.

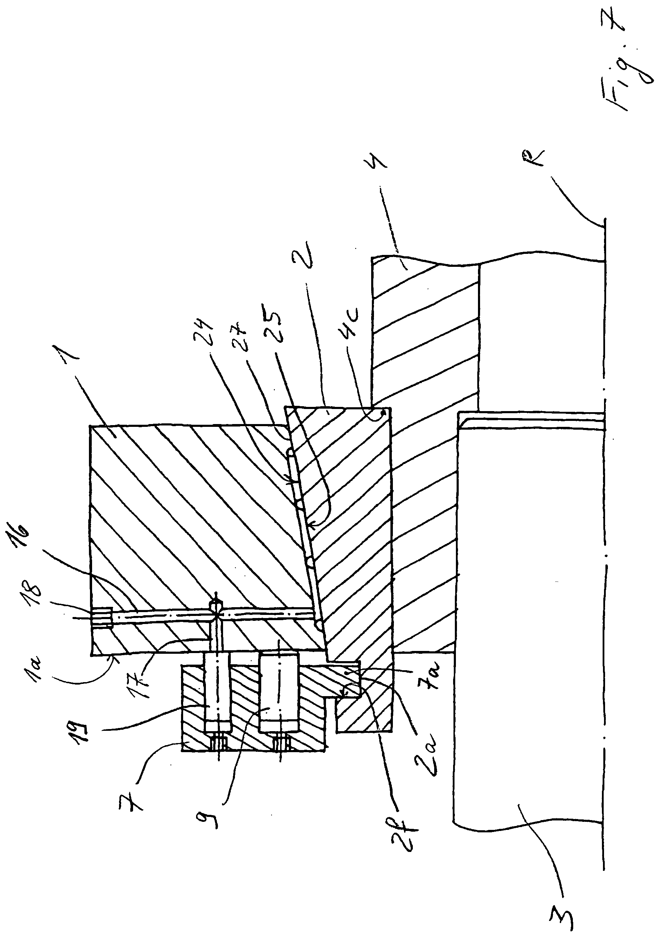

Figur 7 zeigt eine erfindungsgemäße Schrumpfscheibeneinheit nach einem siebten Ausführungsbeispiel mit Spannhülse 2, dessen mechanischer Aufbau daher dem ersten, zweiten, vierten und fünften Ausführungsbeispiel entspricht. Wie bereits beim sechsten Ausfiihrungsbeispiel ist die Trennfuge 27 über die Nabe 1 mit dem Druckfluid beaufschlagbar.

Im Unterschied zu den bereits beschriebenen Ausführungsbeispielen ist jedoch die Schrumpfscheibeneinheit mit einem Anschluss für das Druckfluid versehen, so dass das Werkzeug von der Funktion der Druckfluidzuführung befreit ist. Ihm kommt bei der Montage und/oder Demontage allerdings die Funktion zu, den Fluidkanal der Nabe 1 gegen die Umgebung abzudichten und dadurch den Druckaufbau in der Trennfuge 27 zu ermöglichen.

Der Fluidkanal 16, 17 der Nabe 1 umfasst einen Kanalabschnitt 16, der sich von der Trennfuge 27 bis zu einer Stirnseite der Nabe 1, im Ausführungsbeispiel bis zu der der Trennfuge 27 radial gegenüberliegenden Stirnseite, erstreckt. Ein Endabschnitt des Kanalabschnitts 16 bildet einen Anschluss 18 für die Zuführung des Druckfluids. Der Anschluss 18 ist im Betrieb der Schrumpfscheibeneinheit mittels eines Dichtelements verschlossen. Für die Montage und/oder Demontage werden eine Druckfluidzuführung an den Anschluss 18 angeschlossen und die Trennfuge 27 über den Kanalabschnitt 16 mit Druck beaufschlagt. Der von dem Kanalabschnitt 16 abzweigende Kanalabschnitt 17 mündet an der Stirnseite 1a der Nabe 1 zur Umgebung. Bei offener Mündung wird somit stets ein Druckausgleich zwischen der Umgebung und der Trennfuge 27 sichergestellt.

Für die Montage und/oder Demontage wird das Werkzeug wie bei den anderen Ausführungsbeispielen bereits beschrieben drehwinkelgenau auf der Schrumpfscheibeneinheit positioniert und durch die Schulter 2f der Nut 2a axial abgestützt. Nach solch einer ordnungsgemäßen Fixierung des Werkzeugs werden die Kolben 9 gegen die Nabe 1 bewegt, um die Nabe 1 für die Montage entweder aufzuschieben oder für die Demontage zu sichern, während die Trennfuge 27 mit dem Druckfluid beaufschlagt wird. Wie bereits bei dem sechsten Ausführungsbeispiel lagert die Fixierstruktur 7 einen Dichtkolben 19 gegen die stirnseitige Mündung des Fluidkanals 17 bewegbar, um den Fluidkanal 17 und damit das Drucksystem der Schrumpfscheibeneinheit für die Montage und/oder Demontage abzudichten. Im Unterschied zum sechsten Ausführungsbeispiel dient der Dichtkolben 19 jedoch nur dem Abdichten und nicht gleichzeitig auch noch als Druckfluidzuführung.

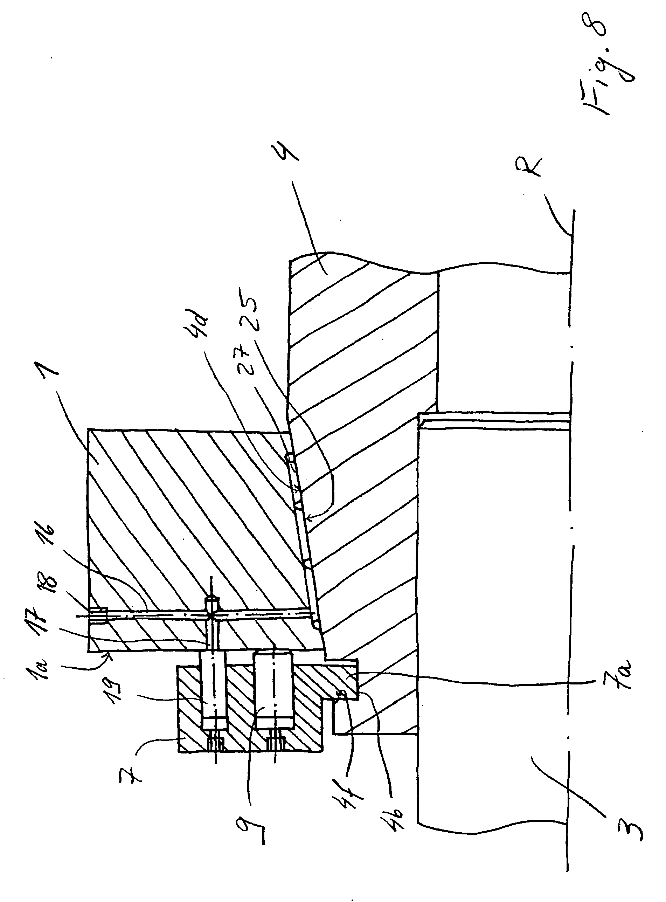

Figur 8 zeigt ein achtes Ausführungsbeispiel einer erfindungsgemäßen Schrumpfscheibeneinheit, die sich von dem siebten Ausführungsbeispiel nur dadurch unterscheidet, dass die Nabe 1 wie bereits bei dem dritten und dem sechsten Ausführungsbeispiel unmittelbar auf die Welle 4 aufgeschrumpft ist. Ansonsten entsprechen die Schrumpfscheibeneinheit und das Werkzeug dem des siebten Ausführungsbeispiels.

Zu dem sechsten, siebten und achten Ausführungsbeispiel ist noch zu bemerken, dass die Funktionen des Aufschiebens und/oder Sicherns der Nabe 1 einerseits und die Funktion des reinen Abdichtens oder des Abdichtens und Zuführens des Druckfluids andererseits nicht unumgänglich von zwei Kolbensystemen, sondern von einem einzigen Kolbensystem oder dem Grunde nach von einem einzigen Kolben ausgeführt werden können, solange sichergestellt ist, dass die Funktion der Druckfluidzuführung oder alternativ die Funktion des Abdichtens nur bei ordnungsgemäßer Fixierung des Werkzeugs an der Schrumpfscheibeneinheit erfüllt werden kann.

**Bezugszeichen:**

| | | |
|---|---|---|
| (1) | : | Nabe |
| (1a) | : | Stirnseite |
| (2) | : | Spannhülse |
| (2a) | : | Ringnut |
| (2b) | : | Absatz |
| (2c) | : | Stirnseite |
| (2d) | : | Stirnseite |
| (2e) | : | Stirnseite |
| (2f) | : | Schulter |
| (2g) | : | Wandung |
| (2h) | : | Außenfläche |
| (2i) | : | radiale Nut |
| (3) | : | Vollwelle |
| (4) | : | Hohlwelle |
| (4a) | : | Stirnseite |
| (4b) | : | Ringnut |
| (4c) | : | Absatz |
| (4d) | : | Umfangsaußenfläche |
| (4f) | : | Schulter |
| (5) | : | Zapfen/ hervorstehender Abschnitt |
| (6) | : | Bohrung/ zurückstehender Abschnitt |
| (7) | : | Ringkörper |
| (7a) | : | Steg |
| (7b) | : | Stirnseite |
| (7c) | : | Gewindebohrung |
| (7d) | : | Innenfläche |
| (7e) | : | Innengewinde |
| (7f) | : | nicht mit Gewinde versehener Abschnitt |
| (7g) | : | Einbaubohrung |
| (7h) | : | Stirnfläche |
| (7i) | : | Stirnfläche |
| (8) | : | Druckschraube |
| (9) | : | Kolben |
| (10a) | : | Bohrung |
| (10b) | : | Bohrung |
| (10c) | : | Druckanschluss |
| (11) | : | radiale Bohrung |
| (12) | : | axiale Bohrung |
| (13) | : | radiale Bohrung |
| (14) | : | Innenfläche |
| (15) | : | Außenfläche |
| (16) | : | Fluidkanal |
| (17) | : | Fluidkanal |
| (18) | : | Anschluss |
| (19) | : | Dichteinrichtung, Dichtkolben |
| (20) | : | Fluidkanal |
| (21) | : | Ventil |
| (22) | : | Innenfläche |
| (23) | : | Außenfläche |
| (24) | : | Umfangsaußenfläche |
| (25) | : | Umfangsinnenfläche |
| (26) | : | Zylinderbohrung, Bohrung |
| (26a) | : | Druckanschluß |
| (27) | : | Trennfuge |
| (28) | : | Dichtelement |
| (29) | : | Sicherungselement |
| (30) | : | Schraube |
| (31) | : | Ringkanal |
| (32) | : | Bohrung |
| (33a) | : | Dichtelement |
| (33b) | : | Dichtelement |
| (34) | : | Trennfuge |
| (35) | : | Einschraublanze |
| (35a) | : | Längsbohrung |
| (35b) | : | Druckanschluss |
| (35c) | : | konischer Zapfen |
| (35d) | : | Außengewinde |
| (35e) | : | verjüngter Schaft |
| (35f) | : | Schlüsselfläche |
| (36) | : | konische Bohrung |
| (36a) | : | Wandung |
| (37) | : | Dichtelement |
| (38) | : | Dichtelement |
| (39) | : | kugeliges Element |
| (40) | : | Röhre |
| (40a) | : | Leitungskanal |
| (41) | : | Druckhülse |
| (41 a) | : | Bohrung |
| (42) | : | Druckfeder |
| (43) | : | Druckstück |
| (43a) | : | Schlüsselflächen |
| (43b) | : | Bohrung |
| (43c) | : | Außengewinde |
| (R) | : | Rotationsachse |

## Patentansprüche

1. Schrumpfscheibeneinheit, umfassend:
a) einen Rotationskörper (2; 4) mit einer Umfangsaußenfläche (24; 4d),
b) eine den Rotationskörper (2; 4) umgebende Nabe (1) mit einer Umfangsinnenfläche (25), die mit der Umfangsaußenfläche (24; 4d) eine zu einer Rotationsachse (R) des Rotationskörpers (2; 4) in Längsschnitten der Schrumpfscheibeneinheit geneigte Trennfuge (27) zwischen dem Rotationskörper (2; 4) und der Nabe (1) bildet, wobei die Nabe (1) auf den Rotationskörper (2; 4) entlang der Trennfuge (27) aufschrumpfbar oder über die Trennfuge (27) aufgeschrumpft ist,
c) einen durch den Rotationskörper (2; 4) oder die Nabe (1) führenden Fluidkanal (11, 12, 13; 16) für die Beaufschlagung der Trennfuge (27) mit einem Druckfluid
d) und eine Fixiereinrichtung (2a, 5, 6; 4b, 5, 6), die von einem aus Rotationskörper (2; 4) oder Nabe (1) allein oder in Kombination mit dem anderen gebildet wird und mittels der ein Werkzeug (7, 8; 7, 9) für die Montage und/oder Demontage der Nabe (1) entweder an dem Rotationskörper (2; 4) oder der Nabe (1) axial abstützbar und an dem Rotationskörper (2; 4) und/oder der Nabe (1) in einer vorgegebenen Drehwinkelposition fixierbar ist,
**dadurch gekennzeichnet, dass**
e) Rotationskörper (2; 4) und/oder Nabe (1) so ausgestaltet sind, dass das Einpressen eines Druckfluids in die Trennfuge (27) nur dann möglich ist, wenn das Werkzeug (7, 8; 7, 9) ordnungsgemäß montiert ist.

2. Schrumpfscheibeneinheit nach dem vorhergehenden Anspruch, **dadurch gekennzeichnet, dass** die Trennfuge (27) wenigstens segmentweise, vorzugsweise umlaufend, konisch ist.

3. Schrumpfscheibeneinheit nach einem der vorhergehenden Ansprüche, **dadurch gekennzeichnet, dass** an entweder dem Rotationskörper (2; 4) oder der Nabe (1) eine Stützschulter (2f) gebildet ist, um das Werkzeug (7, 8; 7, 9) formschlüssig abzustützen.

4. Schrumpfscheibeneinheit nach einem der vorhergehenden Ansprüche, **dadurch gekennzeichnet, dass** an entweder dem Rotationskörper (2; 4) oder der Nabe (1) ein als Ausnehmung (6) oder Vorsprung gebildetes Positionierelement für ein als Vorsprung (5) oder Ausnehmung gebildetes Positionierelement des Werkzeugs gebildet ist, um das Werkzeug (7, 8; 7, 9) drehwinkelgenau zu positionieren.

5. Schrumpfscheibeneinheit nach dem vorhergehenden Anspruch, **dadurch gekennzeichnet, dass** das Positionierelement (6) nahe bei einer Mündung des Fluidkanals der Schrumpfscheibeneinheit angeordnet ist, vorzugsweise in einer auf die Rotationsachse bezogenen Drehwinkelposition, die höchstens 30° von der Mündung des Fluidkanals entfernt ist.

6. Werkzeug für die Montage und/oder Demontage der Schrumpfscheibeneinheit nach einem der vorhergehenden Ansprüche, das Werkzeug umfassend:
a) eine Fixierstruktur (7) für die drehwinkelgenaue Positionierung des Werkzeugs (7, 8; 7, 9) an dem Rotationskörper (2; 4) oder der Nabe (1) und die axiale Abstützung des Werkzeugs (7, 8; 7, 9) an einem aus Rotationskörper (2; 4) und Nabe (1),
b) ein von der Fixierstruktur (7) bewegbar gelagertes Druck- oder Zugelement (8; 9), mittels dem bei an einem aus Rotationskörper (2; 4) und Nabe (1) axial abgestütztem Fixierteil (7) das andere aus Rotationskörper (2; 4) und Nabe (1) mit einer Axialkraft beaufschlagbar ist,
c1) und einen in dem Werkzeug (7, 8; 7, 9) gebildeten Fluidkanal (10a, 10b; 35a), der im fixierten Zustand des Werkzeugs (7, 8; 7, 9) mit dem Fluidkanal (11, 12, 13; 16) der Schrumpfscheibeneinheit verbunden ist, so dass die Trennfuge (27) durch den Fluidkanal (10a, 10b; 35a) des Werkzeugs (7, 8; 7, 9) mit dem Druckfluid beaufschlagbar ist,
c2) oder eine von dem Werkzeug (7, 8; 7, 9) gebildete Dichteinrichtung (17; 18) für die Abdichtung des Fluidkanals (16) der Schrumpfscheibeneinheit.

7. Kombination der Schrumpfscheibeneinheit nach Anspruch 1 und dem an der Schrumpfscheibeneinheit axial abgestützten und drehwinkelgenau positionierten Werkzeug nach Anspruch 6.

8. Schrumpfscheibeneinheit mit separatem Werkzeug, umfassend:
a) eine konische Umfangsaußenfläche (24), welche durch einen Rotationskörper (2; 4), vorzugsweise eine Spannhülse (2) mit vorzugsweise zylindrischer Innenfläche (14) oder eine Welle (4), gebildet wird,
b) eine Nabe (1) mit konischer Umfangsinnenfläche (25), die auf die Umfangsaußenfläche (24) aufgeschoben wird,
c) ein Werkzeug zur Montage und/oder Demontage der Schrumpfscheibeneinheit, welches nicht Teil der Schrumpfscheibeneinheit ist,
**dadurch gekennzeichnet, dass**
d) das Werkzeug nur zur Montage und/oder Demontage der Schrumpfscheibeneinheit kraftschlüssig und/oder formschlüssig mit einem aus Rotationskörper (2; 4) und Nabe (1) verbunden wird,
e) die Trennfuge (27) zwischen der konischen Umfangsaußenfläche (24) und der konischen Umfangsinnenfläche (25) zur Montage und Demontage der Schrumpfscheibeneinheit mit einer Druckflüssigkeit beaufschlagt wird, wobei dieses nur dann erfolgen kann, wenn das Werkzeug ordnungsgemäß an dem einen aus Rotationskörper (2; 4) und Nabe (1) befestigt ist.

9. Schrumpfscheibeneinheit nach einem der vorhergehenden Ansprüche, **dadurch gekennzeichnet, dass** das Werkzeug einen oder mehrere vorstehende oder zurückstehende Abschnitte aufweist, der oder die bei der Befestigung des Werkzeuges in eine entsprechende Anzahl von zu dem oder den Abschnitten im wesentlichen kongruenten Abschnitten von einem aus Rotationskörper (2; 4) und Nabe (1) eingreift oder eingreifen, wobei die Ausgestaltung und Anordnung der Abschnitte die Befestigung des Werkzeuges nur derart zulässt, dass die ordnungsgemäße Funktion des Werkzeuges und der Schrumpfscheibeneinheit gewährleistet ist.

10. Schrumpfscheibeneinheit nach einem der vorhergehenden Ansprüche, **dadurch gekennzeichnet, dass** die ordnungsgemäße Befestigung des Werkzeuges an einem aus Rotationskörper (2; 4) und Nabe (1) durch die Ausgestaltung von Werkzeug und dem einen aus Rotationskörper (2; 4) und Nabe (1) erzwungen wird.

11. Schrumpfscheibeneinheit nach einem der vorhergehenden Ansprüche, **dadurch gekennzeichnet, dass** das Werkzeug über eine Anzahl von Zugschrauben (8) kraftschlüssig mit einem aus Rotationskörper (2; 4) und Nabe (1) verbunden oder verbindbar ist.

12. Schrumpfscheibeneinheit nach einem der vorhergehenden Ansprüche, **dadurch gekennzeichnet, dass** das Werkzeug formschlüssig mit einem aus Rotationskörper (2; 4) und Nabe (1) verbunden ist über wenigstens eine, wenigstens teilweise um eine Außenfläche des einen aus Rotationskörper (2; 4) und Nabe (1) umlaufende Nut (2a; 4b) und wenigstens einen in die wenigstens eine Nut (2a) formschlüssig eingreifenden Abschnitt (7a) des Werkzeuges.

13. Schrumpfscheibeneinheit nach einem der vorhergehenden Ansprüche, **dadurch gekennzeichnet, dass** das Werkzeug reibschlüssig durch Flächenkontakt mit dem einen aus Rotationskörper (2; 4) und Nabe (1) verbunden ist.

14. Schrumpfscheibeneinheit nach einem der vorhergehenden Ansprüche, **dadurch gekennzeichnet, dass**
a) die Trennfuge (27) mit Druckflüssigkeit beaufschlagt wird über eine Zuleitung (11, 12, 13; 16), welche in eines aus Rotationskörper (2; 4) und Nabe (1) integriert ist, und über eine Zuleitung (10a, 10b), welche in das Werkzeug integriert ist,
b) und dass bei ordnungsgemäßer Befestigung des Werkzeuges an dem einen aus Rotationskörper (2; 4) und Nabe (1) eine Verbindung zwischen den Zuleitungen besteht.

15. Schrumpfscheibeneinheit nach dem vorhergehenden Anspruch, **dadurch gekennzeichnet, dass**
a) die Trennfuge (27) mit Druckflüssigkeit beaufschlagt wird über eine Zuleitung (11, 12, 13), welche in die Welle (4) integriert ist, über eine Zuleitung (31, 32), welche in die Spannhülse (2) integriert und mit der Zuleitung (11, 12, 13) der Welle (4) verbunden ist, und über eine Zuleitung (10a, 10b), welche in das Werkzeug integriert ist,
b) und dass bei ordnungsgemäßer Befestigung des Werkzeuges an der Welle (4) eine Verbindung zwischen den Zuleitungen besteht.

16. Schrumpfscheibeneinheit nach einem der vorhergehenden Ansprüche, **dadurch gekennzeichnet, dass** die Trennfuge (27) mit Druckflüssigkeit beaufschlagt wird über eine Zuleitung (11, 12, 13), welche in dem einen aus Rotationskörper (2; 4) und Nabe (1) integriert ist, und über eine Zuleitung (35a), welche durch ein Bauteil des Werkzeuges gebildet wird, wobei das Bauteil mittelbar oder unmittelbar mit einer Fixierstruktur (7) des Werkzeugs verbunden und die in dem Bauteil eingebrachte Zuleitung (35a) vorzugsweise im wesentlichen radial zu der Rotationsachse angeordnet ist.

17. Schrumpfscheibeneinheit dem vorhergehenden Anspruch, **dadurch gekennzeichnet, dass** die in dem Werkzeug ausgebildete Zuleitung durch die Längsbohrung (35a) einer Einschraublanze (35) gebildet wird und die Einschraublanze (35) vorzugsweise über ein Außengewinde (35d) in ein Innengewinde (7e) einer Einbaubohrung (7g) der Fixierstruktur (7) eingeschraubt ist, wobei die Längserstreckung der Einbaubohrung (7g) vorzugsweise im wesentlichen radial zu der Rotationsachse erfolgt.

18. Schrumpfscheibeneinheit nach dem vorhergehenden Anspruch, **dadurch gekennzeichnet, dass** die Einschraublanze (35) an ihrem der Rotationsachse zugewandten Ende vorzugsweise einen konischen Zapfen (35c) aufweist, welcher nach dem Anbau des Werkzeuges an einem aus Rotationskörper (2; 4) und Nabe (1) durch das Einschrauben der Einschraublanze (35) in die Einbaubohrung (7g) an der kongruenten Wandung (36a) einer Bohrung (36), vorzugsweise konischen Bohrung (36), zur Anlage kommt.

19. Schrumpfscheibeneinheit nach dem vorhergehenden Anspruch, **dadurch gekennzeichnet, dass** die Bohrung (36) des einen aus Rotationskörper (2; 4) und Nabe (1) im wesentlichen fluchtend zu der radialen Bohrung (11) eingebracht ist, wobei eine Verbindung zu der Bohrung (11) besteht.

20. Schrumpfscheibeneinheit nach einem der zwei vorhergehenden Ansprüche, **dadurch gekennzeichnet, dass** das Anlegen des konischen Zapfens (35c) an die Wandung (36a) eine Abdichtung der Einschraublanze (35) gegen das eine aus Rotationskörper (2; 4) und Nabe (1) bewirkt, wodurch ein Austreten von Druckflüssigkeit in die Umgebung der Schrumpfscheibeneinheit verhindert wird.

21. Schrumpfscheibeneinheit nach einem der vorhergehenden Ansprüche, **dadurch gekennzeichnet, dass** eine in dem Werkzeug gebildete Druckfluidzuleitung durch den Leitungskanal (40a) einer Röhre (40) gebildet wird.

22. Schrumpfscheibeneinheit nach dem vorhergehenden Anspruch, **dadurch gekennzeichnet, dass** die Röhre (40) an ihrem einen Ende dauerfest und druckdicht mit einem vorzugsweise im wesentlichen kugeligen Element (39) verbunden ist.

23. Schrumpfscheibeneinheit nach dem vorhergehenden Anspruch, **dadurch gekennzeichnet, dass** das andere Ende der Röhre (40) mittelbar oder unmittelbar mit einem Druckanschluss verbunden oder verbindbar ist.

24. Schrumpfscheibeneinheit nach einem der drei vorhergehenden Ansprüche, **dadurch gekennzeichnet, dass** das kugelige Element (39) das Ende der Röhre (40) umgibt, wobei die Öffnung des Leitungskanals (40a) nicht versperrt wird.

25. Schrumpfscheibeneinheit nach einem der vier vorhergehenden Ansprüche, **dadurch gekennzeichnet, dass** die Röhre (40) mittelbar oder unmittelbar mit der Fixierstruktur (7) des Werkzeugs verbunden oder verbindbar ist, wobei ihre Längserstreckung vorzugsweise entlang der Mittelachse einer Einbaubohrung (7g) verläuft, welche vorzugsweise im wesentlichen radial zu der Mittelachse des einen aus Rotationskörper (2; 4) und Nabe (1), vorzugsweise des Rotationskörpers (2; 4), angeordnet ist.

26. Schrumpfscheibeneinheit nach einem der fünf vorhergehenden Ansprüche, **dadurch gekennzeichnet, dass** das kugelige Element (39) nach dem Anbau des Werkzeuges an dem einen aus Rotationskörper (2; 4) und Nabe (1) durch das Einschrauben eines mit einem Außengewinde (43c) versehenen Druckstückes (43) in das Innengewinde (7e) der Einbaubohrung (7g) an der Wandung (36a) einer vorzugsweise konischen Bohrung (36) zur Anlage kommt.

27. Schrumpfscheibeneinheit nach einem der sechs vorhergehenden Ansprüche, **dadurch gekennzeichnet, dass** die vorzugsweise konische Bohrung (36) im wesentlichen fluchtend zu der radialen Bohrung (11) in das einen aus Rotationskörper (2) und Nabe (1), vorzugsweise den Rotationskörper (2; 4), eingebracht ist, wobei eine Verbindung zu der Bohrung (11) besteht.

28. Schrumpfscheibeneinheit nach einem der sieben vorhergehenden Ansprüche, **dadurch gekennzeichnet, dass** das Anlegen des kugeligen Elementes (39) an die Wandung (36a) eine Abdichtung der Röhre (40) gegen das eine aus Rotationskörper (2; 4) und Nabe (1) bewirkt, wodurch ein Austreten von Druckflüssigkeit in die Umgebung der Schrumpfscheibeneinheit verhindert wird.

29. Schrumpfscheibeneinheit nach einem der acht vorhergehenden Ansprüche, **dadurch gekennzeichnet, dass** das Druckstück (43) mittelbar oder unmittelbar mit dem kugeligen Element (39) verbunden ist.

30. Schrumpfscheibeneinheit nach einem der neun vorhergehenden Ansprüche, **dadurch gekennzeichnet, dass** das Druckstück (43) vorzugsweise über ein axiales Federelement und über eine Druckhülse (41) mit dem kugeligen Element (39) verbunden ist.

31. Schrumpfscheibeneinheit nach dem vorhergehenden Anspruch, **dadurch gekennzeichnet, dass** die Röhre (40) vorzugsweise durch eine Bohrung (41 a) der Druckhülse (41) geführt ist.

32. Schrumpfscheibeneinheit nach einem der vorhergehenden Ansprüche, **dadurch gekennzeichnet, dass** die Nabe (1) in montiertem Zustand der Schrumpfscheibeneinheit über eine Anzahl Sicherungselemente (29) formschlüssig an dem Rotationskörper (2; 4) gegen axiale Verschiebung längs zur Mittelachse des Rotationskörpers (2; 4) gesichert wird, wobei die Sicherungselemente (29) kraftschlüssig oder/und formschlüssig in ihrer Lage an einem aus Rotationskörper (2; 4) und Nabe (1) gesichert sind.

33. Schrumpfscheibeneinheit nach einem der vorhergehenden Ansprüche, **dadurch gekennzeichnet, dass** eine axiale Verschiebung der Spannhülse (2) längs zur Mittelachse der Welle (4) durch die Ausgestaltung von Spannhülse (2) und Welle (4) verhindert wird.

34. Werkzeug nach Anspruch 5, **dadurch gekennzeichnet, dass** die Fixierstruktur (7) ein Ringkörper ist und eine Anzahl von Baueinheiten (8; 9) trägt, welche die axialen Kräfte zur Montage der Schrumpfscheibeneinheit aufbringen,
und dass die Fixierstruktur (7) einteilig oder mehrteilig ausgeführt ist, wobei die wenigstens eine Teilung vorzugsweise radial zur Längsachse der Fixierstruktur (7) ausgeführt sind.

35. Werkzeug nach dem vorhergehenden Anspruch, **dadurch gekennzeichnet, dass** die Baueinheiten zum Aufbringen der axialen Kräfte ausgeführt sind als fluidbetätigte Arbeitszylinder oder als Schraubelemente oder als Keilmechanismen oder als Hebelmechanismen oder als deren Kombinationen, und dass diese Baueinheiten mittelbar oder unmittelbar mit der Fixierstruktur (7) verbunden sind.

36. Werkzeug nach dem vorhergehenden Anspruch, **dadurch gekennzeichnet, dass** die Baueinheiten zum Aufbringen der axialen Kräfte ausgeführt sind als Hydraulikzylinder, welche im wesentlichen aus Zylinderbohrungen (26) mit einem Druckanschluss (26a) und aus Kolben (9) bestehen, wobei die Zylinderbohrungen (26) vorzugsweise unmittelbar in die Fixierstruktur (7) eingearbeitet sind.

37. Schrumpfscheibeneinheit nach einem der vorhergehenden Ansprüche, **dadurch gekennzeichnet, dass** die Umfangsaußenfläche (24; 4a) und die Umfangsinnenfläche (25) eine Anzahl kongruenter Abschnitte aufweisen.

## Claims

1. A shrinkage disc unit, comprising:
a) a rotational body (2; 4) comprising a circumferential outer surface (24; 4d);
b) a hub (1) surrounding the rotational body (2; 4) and comprising a circumferential inner surface (25) which together with the circumferential outer surface (24; 4d) forms a joint (27) between the rotational body (2; 4) and the hub (1) which is inclined with respect to a rotational axis (R) of the rotational body (2; 4) in longitudinal sections of the shrinkage disc unit, wherein the hub (1) can be shrunk onto the rotational body (2; 4) along the joint (27) or is shrunk on over the joint (27);
c) a fluid channel (11, 12, 13; 16) leading through the rotational body (2; 4) or the hub (1), for charging the joint (27) with a pressurised fluid;
d) and a fixing means (2a, 5, 6; 4b, 5, 6) which is formed by one of the rotational body (2; 4) and the hub (1), alone or in combination with the other, and by means of which a tool (7, 8; 7, 9) can be axially supported either on the rotational body (2; 4) or the hub (1) and fixed in a predetermined rotational angular position on the rotational body (2; 4) and/or the hub (1), for assembling and/or disassembling the hub (1),
**characterised in that**
e) the rotational body (2; 4) and/or the hub (1) are configured such that a pressurised fluid can only be pressed into the joint (27) when the tool (7, 8; 7, 9) is mounted properly.

2. The shrinkage disc unit according to the preceding claim, **characterised in that** the joint (27) is conical at least in segments, preferably circumferentially.

3. The shrinkage disc unit according to any one of the preceding claims, **characterised in that** a supporting collar (2f) is formed on either the rotational body (2; 4) or the hub (1), in order to support the tool (7, 8; 7, 9) in a positive lock.

4. The shrinkage disc unit according to any one of the preceding claims, **characterised in that** a positioning element formed as a cavity (6) or protrusion, for a positioning element of the tool formed as a protrusion (5) or cavity, is formed on either the rotational body (2; 4) or the hub (1), in order to position the tool (7, 8; 7, 9) at an exact rotational angle.

5. The shrinkage disc unit according to the preceding claim, **characterised in that** the positioning element (6) is arranged near to a port of the fluid channel of the shrinkage disc unit, preferably in a rotational angular position - relative to the rotational axis - which is 30° at most away from the port of the fluid channel.

6. A tool for assembling and/or disassembling the shrinkage disc unit according to any one of the preceding claims, said tool comprising:
a) a fixing structure (7) for positioning the tool (7, 8; 7, 9) on the rotational body (2; 4) or the hub (1) at an exact rotational angle and axially supporting the tool (7, 8; 7, 9) on one of the rotational body (2; 4) and the hub (1);
b) a pressure element or tensile element (8; 9), supported by the fixing structure (7) such that it can be moved, by means of which - when a fixing part (7) is axially supported on one of the rotational body (2; 4) and the hub (1) - the other of the rotational body (2; 4) and the hub (1) can be charged with an axial force;
c1) and a fluid channel (10a, 10b; 35a) formed in the tool (7, 8; 7, 9) and - when the tool (7, 8; 7, 9) is fixed - connected to the fluid channel (11, 12, 13; 16) of the shrinkage disc unit, such that the joint (27) can be charged with the pressurised fluid through the fluid channel (10a, 10b; 35a) of the tool (7, 8; 7, 9);
c2) or a sealing means (17; 18) formed by the tool (7, 8; 7, 9), for sealing off the fluid channel (16) of the shrinkage disc unit.

7. A combination of the shrinkage disc unit according to claim 1 and the tool - axially supported on the shrinkage disc unit and positioned at an exact rotational angle - according to claim 6.

8. A shrinkage disc unit including a separate tool, comprising:
a) a conical circumferential outer surface (24) formed by a rotational body (2; 4), preferably a tensioning sleeve (2) with a preferably cylindrical inner surface (14) or a shaft (4);
b) a hub (1) having a conical circumferential inner surface (25) which is pushed onto the circumferential outer surface (24);
c) a tool for assembling and/or disassembling the shrinkage disc unit, which is not a part of the shrinkage disc unit;
**characterised in that**:
d) the tool is only connected to one of the rotational body (2; 4) and the hub (1) in a non-positive and/or positive lock for assembling and/or disassembling the shrinkage disc unit;
e) the joint (27) between the conical circumferential outer surface (24) and the conical circumferential inner surface (25) is charged with a pressurised fluid for assembling and disassembling the shrinkage disc unit, wherein this can only be achieved when the tool is properly fastened to said one of the rotational body (2; 4) and the hub (1).

9. The shrinkage disc unit according to any one of the preceding claims, **characterised in that** the tool comprises one or more protruding or retracted portions which engage(s) with a corresponding number of portions of one of the rotational body (2; 4) and the hub (1) which is/are substantially congruent with respect to said portion or portions when fastening the tool, wherein the configuration and arrangement of the portions only allows the tool to be fastened such that the tool and the shrinkage disc unit are guaranteed to function properly.

10. The shrinkage disc unit according to any one of the preceding claims, **characterised in that** the tool is forced to be properly fastened to one of the rotational body (2; 4) and the hub (1) by the configuration of the tool and said one of the rotational body (2; 4) and the hub (1).

11. The shrinkage disc unit according to any one of the preceding claims, **characterised in that** the tool can be or is connected to one of the rotational body (2; 4) and the hub (1) in a non-positive lock via a number of tensile screws (8).

12. The shrinkage disc unit according to any one of the preceding claims, **characterised in that** the tool is connected to one of the rotational body (2; 4) and the hub (1) in a positive lock via at least one groove (2a; 4b) at least partially encircling an outer surface of said one of the rotational body (2; 4) and the hub (1) and via at least one portion (7a) of the tool engaging the at least one groove (2a) in a positive lock.

13. The shrinkage disc unit according to any one of the preceding claims, **characterised in that** the tool is connected to said one of the rotational body (2; 4) and the hub (1) in a frictional lock by surface contact.

14. The shrinkage disc unit according to any one of the preceding claims, **characterised in that:**
a) the joint (27) is charged with pressurised fluid via a supply conduit (11, 12, 13; 16) which is integrated into one of the rotational body (2; 4) and the hub (1) and via a supply conduit (10a, 10b) which is integrated into the tool.;
b) and **in that** there is a connection between the supply conduits when the tool is properly fastened to said one of the rotational body (2; 4) and the hub (1).

15. The shrinkage disc unit according to the preceding claim, **characterised in that:**
a) the joint (27) is charged with pressurised fluid via a supply conduit (11, 12, 13) which is integrated into the shaft (4), via a supply conduit (31, 32) which is integrated into the tensioning sleeve (2) and connected to the supply conduit (11, 12, 13) of the shaft (4), and via a supply conduit (10a, 10b) which is integrated into the tool;
b) and **in that** there is a connection between the supply conduits when the tool is properly fastened to the shaft (4).

16. The shrinkage disc unit according to any one of the preceding claims, **characterised in that** the joint (27) is charged with pressurised fluid via a supply conduit (11, 12, 13) which is integrated into said one of the rotational body (2; 4) and the hub (1) and via a supply conduit (35a) formed by a component of the tool, wherein the component is connected indirectly or directly to a fixing structure (7) of the tool, and the supply conduit (35a) inserted in the component is preferably arranged substantially radially with respect to the rotational axis.

17. The shrinkage disc unit according to the preceding claim, **characterised in that** the supply conduit formed in the tool is formed by the longitudinal bore (35a) of a screw-in lance (35), and the screw-in lance (35) is preferably screwed via an outer thread (35d) into an inner thread (7e) of an installation bore (7g) of the fixing structure (7), wherein the longitudinal extension of the installation bore (7g) is preferably substantially radial with respect to the rotational axis.

18. The shrinkage disc unit according to the preceding claim, **characterised in that** the end of the screw-in lance (35) facing the rotational axis preferably comprises a conical trunnion (35c) which, once the tool has been attached to one of the rotational body (2; 4) and the hub (1), comes to rest on the congruent wall (36a) of a bore (36), preferably a conical bore (36), when the screw-in lance (35) is screwed into the installation bore (7g).

19. The shrinkage disc unit according to the preceding claim, **characterised in that** the bore (36) of said one of the rotational body (2; 4) and the hub (1) is inserted substantially flush with the radial bore (11), wherein there is a connection to the bore (11).

20. The shrinkage disc unit according to any one of the preceding two claims, **characterised in that** the conical trunnion (35c) coming to rest on the wall (36a) seals off the screw-in lance (35) from said one of the rotational body (2; 4) and the hub (1), preventing pressurised fluid from escaping into the surroundings of the shrinkage disc unit.

21. The shrinkage disc unit according to any one of the preceding claims, **characterised in that** a pressurised fluid supply conduit formed in the tool is formed by the conduit channel (40a) of a tube (40).

22. The shrinkage disc unit according to the preceding claim, **characterised in that** one end of the tube (40) is connected, permanently and pressure-sealed, to a preferably substantially spherical element (39).

23. The shrinkage disc unit according to the preceding claim, **characterised in that** the other end of the tube (40) can be or is connected indirectly or directly to a pressure port.

24. The shrinkage disc unit according to any one of the preceding three claims, **characterised in that** the spherical element (39) surrounds the end of the tube (40), wherein the opening of the conduit channel (40a) is not blocked.

25. The shrinkage disc unit according to any one of the preceding four claims, **characterised in that** the tube (40) can be or is connected indirectly or directly to the fixing structure (7) of the tool, wherein its longitudinal extension preferably runs along the centre axis of an installation bore (7g) which is preferably arranged substantially radially with respect to the centre axis of said one of the rotational body (2; 4) and the hub (1), preferably the rotational body (2; 4).

26. The shrinkage disc unit according to any one of the preceding five claims, **characterised in that** once the tool has been attached to said one of the rotational body (2; 4) and the hub (1), the spherical element (39) comes to rest on the wall (36a) of a preferably conical bore (36), when a pressure piece (43) provided with an outer thread (43c) is screwed into the inner thread (7e) of the installation bore (7g).

27. The shrinkage disc unit according to any one of the preceding six claims, **characterised in that** the preferably conical bore (36) is inserted, substantially flush with the radial bore (11), into said one of the rotational body (2; 4) and the hub (1), preferably the rotational body (2; 4), wherein there is a connection to the bore (11).

28. The shrinkage disc unit according to any one of the preceding seven claims, **characterised in that** the spherical element (39) coming to rest on the wall (36a) seals off the tube (40) from said one of the rotational body (2; 4) and the hub (1), preventing pressurised fluid from escaping into the surroundings of the shrinkage disc unit.

29. The shrinkage disc unit according to any one of the preceding eight claims, **characterised in that** the pressure piece (43) is connected indirectly or directly to the spherical element (39).

30. The shrinkage disc unit according to any one of the preceding nine claims, **characterised in that** the pressure piece (43) is preferably connected to the spherical element (39) via an axial spring element and via a pressure sleeve (41).

31. The shrinkage disc unit according to the preceding claim, **characterised in that** the tube (40) is preferably guided through a bore (41a) of the pressure sleeve (41).

32. The shrinkage disc unit according to any one of the preceding claims, **characterised in that** when the shrinkage disc unit is assembled, the hub (1) is secured against axially shifting along the centre axis of the rotational body (2; 4) in a positive lock on the rotational body (2; 4) via a number of securing elements (29), wherein the securing elements (29) are secured in their position on one of the rotational body (2; 4) and the hub (1) in a non-positive lock or/and a positive lock.

33. The shrinkage disc unit according to any one of the preceding claims, **characterised in that** the tensioning sleeve (2) is prevented from axially shifting along the centre axis of the shaft (4) by the configuration of the tensioning sleeve (2) and the shaft (4).

34. The tool according to claim 6, **characterised in that** the fixing structure (7) is an annular body and bears a number of sub-assemblies (8; 9) which apply the axial forces for assembling the shrinkage disc unit, and **in that** the fixing structure (7) is embodied in one or more parts, wherein the at least one division is preferably embodied radially with respect to the longitudinal axis of the fixing structure (7).

35. The tool according to the preceding claim, **characterised in that** the sub-assemblies for applying the axial forces are embodied as fluid-operated duty cylinders or as screw elements or as wedge mechanisms or as lever mechanisms or as combinations of these, and **in that** these sub-assemblies are connected indirectly or directly to the fixing structure (7).

36. The tool according to the preceding claim, **characterised in that** the sub-assemblies for applying the axial forces are embodied as hydraulic cylinders which consist substantially of cylindrical bores (26) comprising a pressure port (26a) and of pistons (9), wherein the cylindrical bores (26) are preferably worked directly into the fixing structure (7).

37. The shrinkage disc unit according to any one of the preceding claims, **characterised in that** the circumferential outer surface (24; 4d) and the circumferential inner surface (25) comprise a number of congruent portions.

## Revendications

1. Unité de disque de serrage, comportant :
a) un corps de rotation (2 ; 4) ayant une surface extérieure circonférentielle (24 ; 4d),
b) un moyeu (1) entourant le corps de rotation (2 ; 4), ayant une surface circonférentielle intérieure (25) qui, avec la surface circonférentielle extérieure (24 ; 4d), forme un joint de séparation (27) incliné par rapport à un axe de rotation (R) du corps de rotation (2 ; 4) dans des parties longitudinales de l'unité de disque de serrage, entre le corps de rotation (2 ; 4) et le moyeu (1), le moyeu (1) pouvant être fretté sur le corps de rotation (2 ; 4) le long du joint de séparation (27) ou est fretté sur le joint de séparation (27),
c) un canal de fluide (11, 12, 13 ; 16) passant à travers le corps de rotation (2 ; 4) ou le moyeu (1) pour l'application d'un fluide sous pression sur le joint de séparation (27),
d) et un dispositif de fixation (2a, 5, 6 ; 4b, 5, 6) qui est formé par un élément parmi le corps de rotation (2 ; 4) ou le moyeu (1), seuls ou en combinaison l'un avec l'autre, et au moyen duquel un outil (7, 8 ; 7, 9) peut être supporté axialement sur le corps de rotation (2 ; 4) ou le moyeu (1), et peut être fixé sur le corps de rotation (2 ; 4) et/ou le moyeu (1) dans une position d'angle de rotation prédéfinie, pour le montage et/ou le démontage du moyeu (1),
**caractérisée en ce que**
e) le corps de rotation (2 ; 4) et/ou le moyeu
(1) sont agencés de telle sorte que la pression d'un fluide sous pression dans le joint de séparation (27) est uniquement possible lorsque l'outil (7, 8 ; 7, 9) est correctement monté.

2. Unité de disque de serrage selon la revendication précédente, **caractérisée en ce que** le joint de séparation (27) est conique au moins par segments, de préférence de manière circonférentielle.

3. Unité de disque de serrage selon l'une des revendications précédentes, **caractérisée en ce qu'**un épaulement d'appui (2f) est formé sur le corps de rotation (2 ; 4) ou le moyeu (1) afin de supporter l'outil (7, 8 ; 7, 9) par complémentarité de formes.

4. Unité de disque de serrage selon l'une des revendications précédentes, **caractérisée en ce qu'**un élément de positionnement formé comme un évidement (6) ou une saillie sur le corps de rotation (2 ; 4) ou le moyeu (1) est formé pour un élément de positionnement de l'outil, formé comme un évidement (5) ou une saillie, afin de positionner l'outil (7, 8 ; 7, 9) à un angle de rotation précis.

5. Unité de disque de serrage selon la revendication précédente, **caractérisée en ce que** l'élément de positionnement (6) est agencé près d'un orifice du canal de fluide de l'unité de disque de serrage, de préférence dans une certaine position d'angle de rotation par rapport à l'axe de rotation qui est éloignée d'au plus 30 ° de l'orifice du canal de fluide.

6. Outil pour le montage et/ou démontage de l'unité de disque de serrage selon l'une des revendications précédentes, l'outil comportant :
a) une structure de fixation (7) pour le positionnement de l'outil (7, 8 ; 7, 9) à un angle de rotation précis sur le corps de rotation (2 ; 4) ou le moyeu (1) et le support axial de l'outil (7, 8 ; 7, 9) sur un élément parmi le corps de rotation (2 ; 4) et le moyeu (1),
b) un élément de compression ou de traction (8 ; 9) supporté de manière mobile par la structure de fixation (7), au moyen duquel, lorsqu'une partie de fixation (7) supportée axialement sur un élément parmi le corps de rotation (2 ; 4) et le moyeu (1), l'autre élément parmi le corps de rotation (2 ; 4) et le moyeu (1) peut être soumis à une force axiale,
c1) et un canal de fluide (10a, 10b ; 35a) formé dans l'outil (7, 8 ; 7, 9) et raccordé au canal de fluide (11, 12, 13 ; 16) de l'unité de disque de serrage lorsque l'outil (7, 8 ; 7, 9) est à l'état fixé, de telle sorte que le joint de séparation (27) peut être soumis au fluide sous pression à travers le canal de fluide (10a, 10b ; 35a) de l'outil (7, 8 ; 7, 9),
c2) ou un dispositif d'étanchéité (17 ; 18) formé par l'outil (7, 8 ; 7, 9) pour l'étanchéification du canal de fluide (16) de l'unité de disque de serrage.

7. Combinaison de l'unité de disque de serrage selon la revendication 1 et de l'outil axialement supporté sur l'unité de disque de serrage et positionné à un angle de rotation précis, selon la revendication 6.

8. Unité de disque de serrage avec outil séparé, comportant :
a) une surface circonférentielle extérieure conique (24) formée par un corps de rotation (2 ; 4), de préférence un manchon de serrage (2) ayant de préférence une surface intérieure cylindrique (14), ou un arbre (4),
b) un moyeu (1) ayant une surface circonférentielle intérieure conique (25) qui est poussé sur la surface circonférentielle extérieure (24),
c) un outil pour le montage et/ou démontage de l'unité de disque de serrage qui ne fait pas partie de l'unité de disque de serrage,
**caractérisée en ce que**
d) l'outil est uniquement relié à un élément parmi le corps de rotation (2 ; 4) et le moyeu (1) à force et/ou par complémentarité de formes pour le montage et/ou le démontage de l'unité de disque de serrage,
e) le joint de séparation (27) entre la surface circonférentielle extérieure conique (24) et la surface circonférentielle intérieure conique (25) est soumis à un liquide sous pression pour le montage et le démontage de l'unité de disque de serrage, cette opération ne pouvant être effectuée que lorsque l'outil est correctement fixé sur ledit un élément parmi le corps de rotation (2 ; 4) et le moyeu (1).

9. Unité de disque de serrage selon l'une des revendications précédentes, **caractérisée en ce que** l'outil comporte une ou plusieurs parties en saillie ou en retrait qui pénètrent dans un nombre correspondant de parties sensiblement congrues de la ou des parties d'un élément parmi le corps de rotation (2 ; 4) et le moyeu (1) lors de la fixation de l'outil, la configuration et l'agencement des parties ne permettant la fixation de l'outil que lorsque le fonctionnement correct de l'outil et de l'unité de disque de serrage est assuré.

10. Unité de disque de serrage selon l'une des revendications précédentes, **caractérisée en ce que** la fixation correcte de l'outil sur un élément parmi le corps de rotation (2 ; 4) et le moyeu (1) est forcée par la configuration de l'outil et dudit un élément parmi le corps de rotation (2 ; 4) et le moyeu (1).

11. Unité de disque de serrage selon l'une des revendications précédentes, **caractérisée en ce que** l'outil est assemblé ou peut être assemblé à force avec un élément parmi le corps de rotation (2 ; 4) et le moyeu (1) par l'intermédiaire d'une pluralité de vis de tension (8).

12. Unité de disque de serrage selon l'une des revendications précédentes, **caractérisée en ce que** l'outil est assemblé par complémentarité de formes avec un élément parmi le corps de rotation (2 ; 4) et le moyeu (1) par l'intermédiaire d'au moins une gorge (2a ; 4b) entourant au moins partiellement une surface extérieure dudit un élément parmi le corps de rotation (2 ; 4) et le moyeu (1), et d'au moins une partie (7a) de l'outil pénétrant dans la au moins une gorge (2a) par complémentarité de formes.

13. Unité de disque de serrage selon l'une des revendications précédentes, **caractérisée en ce que** l'outil est assemblé par friction avec ledit un élément parmi le corps de rotation (2 ; 4) et le moyeu (1), par contact de surface.

14. Unité de disque de serrage selon l'une des revendications précédentes, **caractérisée en ce que**
a) le joint de séparation (27) est soumis à du liquide sous pression par l'intermédiaire d'une conduite d'alimentation (11, 12, 13 ; 16) qui est intégrée dans un élément parmi le corps de rotation (2 ; 4) et le moyeu (1), et par l'intermédiaire d'une conduite d'alimentation (10a, 10b) qui est intégrée dans l'outil,
b) et qu'une liaison existe entre les conduites d'alimentation lorsque l'outil est correctement fixé sur ledit un élément parmi le corps de rotation (2 ; 4) et le moyeu (1).

15. Unité de disque de serrage selon la revendication précédente, **caractérisée en ce que**
a) le joint de séparation (27) est soumis à du liquide sous pression par l'intermédiaire d'une conduite d'alimentation (11, 12, 13) qui est intégrée dans l'arbre (4), par l'intermédiaire d'une conduite d'alimentation (31, 32) qui est intégrée dans le manchon de serrage (2) et reliée à la conduite d'alimentation (11, 12, 13) de l'arbre (4), et par l'intermédiaire d'une conduite d'alimentation (10a, 10b) qui est intégrée dans l'outil,
b) et qu'une liaison existe entre les conduites d'alimentation lorsque l'outil est correctement fixé sur l'arbre (4).

16. Unité de disque de serrage selon l'une des revendications précédentes, **caractérisée en ce que** le joint de séparation (27) est soumis à du liquide sous pression par l'intermédiaire d'une conduite d'alimentation (11, 12, 13) qui est intégrée dans ledit un élément parmi le corps de rotation (2 ; 4) et le moyeu (1), et par l'intermédiaire d'une conduite d'alimentation (35a) qui est formée par un composant de l'outil, dans laquelle le composant est directement ou indirectement relié à une structure de fixation (7) de l'outil et la conduite d'alimentation (35a) placée dans le composant est de préférence agencée de manière sensiblement radiale à l'axe de rotation.

17. Unité de disque de serrage selon la revendication précédente, **caractérisée en ce que** la conduite d'alimentation agencée dans l'outil est formée par l'alésage longitudinal (35a) d'une lance à visser (35) et la lance à visser (35) est de préférence vissée par l'intermédiaire d'un filetage extérieur (35d) dans un filetage intérieur (7e) d'un alésage de montage (7g) de la structure de fixation (7), l'extension longitudinale de l'alésage de montage (7g) étant de préférence sensiblement radiale et par rapport à l'axe de rotation.

18. Unité de disque de serrage selon la revendication précédente, **caractérisée en ce que** la lance à visser (35) comporte de préférence, à son extrémité dirigée vers l'axe de rotation, un tourillon conique (35c) qui, une fois que l'outil a été monté sur un élément parmi le corps de rotation (2 ; 4) et le moyeu (1), vient en appui sur la paroi congrue (36 a) d'un alésage (36), de préférence un alésage conique (36), lorsque la lance à visser (35) est vissée dans l'alésage de montage (7g).

19. Unité de disque de serrage selon la revendication précédente, **caractérisée en ce que** l'alésage (36) dudit un élément parmi le corps de rotation (2 ; 4) et le moyeu (1) est inséré de manière sensiblement affleurante à l'alésage radial (11), en créant ainsi une liaison avec l'alésage (11).

20. Unité de disque de serrage selon l'une des deux revendications précédentes, **caractérisée en ce que** le tourillon conique (35c) venant en appui sur la paroi (36a) étanchéifie la lance à visser (35) contre ledit un élément parmi le corps de rotation (2 ; 4) et le moyeu (1), en empêchant ainsi du liquide sous pression de s'échapper au voisinage de l'unité de disque de serrage.

21. Unité de disque de serrage selon l'une des revendications précédentes, **caractérisée en ce qu'**une conduite d'alimentation en fluide sous pression formée dans l'outil est formée par le canal de conduite (40a) d'un tube (40).

22. Unité de disque de serrage selon la revendication précédente, **caractérisée en ce que** l'une des extrémités du tube (40) est reliée, de manière permanente et étanche à la pression, à un élément (39) de préférence sensiblement sphérique.

23. Unité de disque de serrage selon la revendication précédente, **caractérisée en ce que** l'autre extrémité du tube (40) est ou peut être reliée, directement ou indirectement, à un orifice de pression.

24. Unité de disque de serrage selon l'une des trois revendications précédentes, **caractérisée en ce que** l'élément sphérique (39) entoure l'extrémité du tube (40), de sorte que l'ouverture du canal de conduite (40a) n'est pas bloquée.

25. Unité de disque de serrage selon l'une des quatre revendications précédentes, **caractérisée en ce que** le tube (40) est ou peut être relié, directement ou indirectement, à la structure de fixation (7) de l'outil, de sorte que son extension longitudinale s'étend de préférence le long de l'axe central d'un alésage de montage (7g) qui est de préférence agencé de manière sensiblement radiale à l'axe central dudit un élément parmi le corps de rotation (2 ; 4) et le moyeu (1), de préférence du corps de rotation (2 ; 4).

26. Unité de disque de serrage selon l'une des cinq revendications précédentes, **caractérisée en ce qu'**une fois que l'outil a été fixé sur ledit un élément parmi le corps de rotation (2 ; 4) et le moyeu (1), l'élément sphérique (39) vient en appui sur la paroi (36a) d'un alésage de préférence conique (36), lorsqu'une pièce de pression (43) munie d'un filetage extérieur (43c) est vissée dans le filetage intérieur (7e) de l'alésage de montage (7g).

27. Unité de disque de serrage selon l'une des six revendications précédentes, **caractérisée en ce que** l'alésage de préférence conique (36) est inséré, de manière sensiblement affleurante à l'alésage radial (11), dans ledit un élément parmi le corps de rotation (2) et le moyeu (1), de préférence le corps de rotation (2 ; 4), en créant ainsi une liaison avec l'alésage (11).

28. Unité de disque de serrage selon l'une des sept revendications précédentes, **caractérisée en ce que** l'élément sphérique (39) venant en appui sur la paroi (36a) étanchéifie le tube (40) contre ledit un élément parmi le corps de rotation (2 ; 4) et le moyeu (1), en empêchant ainsi du fluide sous pression de s'échapper au voisinage de l'unité de disque de serrage.

29. Unité de disque de serrage selon l'une des huit revendications précédentes, **caractérisée en ce que** la pièce de pression (43) est reliée directement ou indirectement à l'élément sphérique (39).

30. Unité de disque de serrage selon l'une des neuf revendications précédentes, **caractérisée en ce que** la pièce de pression (43) est reliée à l'élément sphérique (39) de préférence par l'intermédiaire d'un élément de ressort axial et par l'intermédiaire d'une douille de pression (41).

31. Unité de disque de serrage selon la revendication précédente, **caractérisée en ce que** le tube (40) est de préférence guidé par un alésage (41a) de la douille de pression (41).

32. Unité de disque de serrage selon l'une des revendications précédentes, **caractérisée en ce qu'**une fois l'unité de disque de serrage est assemblée, le moyeu (1) est bloqué par une pluralité d'éléments de blocage (29), par complémentarité de forme, sur le corps de rotation (2 ; 4) pour empêcher un déplacement axial le long de l'axe central du corps de rotation (2 ; 4), les éléments de blocage (29) étant bloqués à force et/ou par complémentarité de formes dans leur position sur un élément parmi le corps de rotation (2 ; 4) et le moyeu (1).

33. Unité de disque de serrage selon l'une des revendications précédentes, **caractérisée en ce qu'**un déplacement axial du manchon de serrage (2) est empêché le long de l'axe central de l'arbre (4) par la configuration du manchon de serrage (2) et de l'arbre (4).

34. Outil selon la revendication 5, **caractérisé en ce que** la structure de fixation (7) est un corps annulaire et porte une pluralité d'unités de construction (8 ; 9) qui appliquent les forces axiales destinées au montage de l'unité de disque de serrage, et que la structure de fixation (7) est mise en oeuvre en une ou plusieurs parties, dans lequel la au moins une séparation est de préférence mise en oeuvre radialement par rapport à l'axe longitudinal de la structure de fixation (7).

35. Outil selon la revendication précédente, **caractérisé en ce que** les unités de construction pour l'application des forces axiales sont mises en oeuvre sous forme de cylindres de travail actionnés par un fluide ou sous forme d'éléments à vis ou sous forme de mécanismes à clavette ou sous forme de mécanismes à levier ou sous forme de combinaisons de ceux-ci, et que ces unités de construction sont directement ou indirectement reliées à la structure de fixation (7).

36. Outil selon la revendication précédente, **caractérisé en ce que** les unités de construction pour l'application des forces axiales sont mises en oeuvre sous forme de vérins hydrauliques qui sont sensiblement constitués d'alésages cylindriques (26) ayant un orifice de pression (26) et de pistons (9), les alésages cylindriques (26) étant usinés, de préférence directement, dans la structure de fixation (7).

37. Unité de disque de serrage selon l'une des revendications précédentes, **caractérisée en ce que** la surface circonférentielle extérieure (24 ; 4a) et la surface circonférentielle intérieure (25) comportent une pluralité de parties congrues.
